# EUROPEAN PATENT APPLICATION

(11) **EP 2 296 099 A2**
(43) Date of publication of application: **16.03.2011**
(21) Application number: 10176497.5
(22) Date of filing: 14.09.2010
(51) Int. Cl.: G06F 21/20, G06F 21/24

(54) **Information processing apparatus, information processing system, utilization constraint method, utilization constraint program, and recording medium storing the program**

(30) Priority: 14.09.2009 JP 2009212444; 23.02.2010 JP 2010037641
(71) Applicant: Ricoh Company Ltd., Tokyo 143-8555 (JP)
(72) Inventor: Satoru, Nishio, Tokyo 143-8555 (JP)
(74) Representative: Schwabe - Sandmair - Marx

(57) **Abstract**

A disclosed information processing system includes an information processing apparatus configured to carry out a function related to printing, an authentication management apparatus configured to carry out a user authentication for enabling a user to request to carry out the function of the information processing apparatus, and a predetermined data transmission path configured to connect the information processing apparatus to the authentication management apparatus, wherein the information processing apparatus carries out a process of the function in response to the request from the user and is enabled to report operation logs to an outside of the information processing apparatus, and any one of the information processing apparatus and the authentication management apparatus determines whether an execution mode of the process required by the user is to be changed based on the operation logs.

## Description

### BACKGROUND OF THE INVENTION

### 1. Field of the Invention

The present invention relates to an information processing apparatus, an information processing system, a utilization constraint method, a utilization constraint program, and a recording medium recording the program.

### 2. Description of the Related Art

Patent Document 1 discloses a multifunction peripheral (MFP) which executes a job requested by an authenticated user within a range of an input number of pages. Some of the image processing apparatuses may limit execution of the requested job from an authenticated user based on a counter value (a value obtained by job logs) included in an address book administered in some of the image processing apparatuses or an external device such as a server.

As described, recent image processing apparatuses have an authentication function of authenticating users by the users' logging into or out of the image processing apparatuses and a utilization constraint function of limiting functions such as print functions installed in the image processing apparatuses. With this, it is possible to prevent information from leaking due to uses of the image processing apparatuses to achieve high confidentiality, and realize resource savings, cost reduction or the like.

Meanwhile, the recent processing apparatuses can install applications developed by a third party vendor or the like as plug-ins after delivering the processing apparatuses. It becomes possible to promote the efficiency of users' business by associating the functions of the image processing apparatuses with the external systems.

However, an example of utilization constraint is not so accurate. For example, the image processing apparatus disclosed in Patent Document 1 determines whether the printing function is constrained based on the utilization expected number input from a user. Therefore, the accuracy of the utilization constraint depends on the accuracy of the input utilization expected number. If the user does not accurately input the utilization expected number, the accuracy is degraded.

Further, an example of the image processing apparatuses has a utilization constraint function for an internal function of the image processing apparatus. In the example, the utilization constraint has not been appropriately carried out for an external system which is used by the application. Especially, when a fee is charged for use of the external system, it is not preferable to permit unlimited uses of the application in association with the external system by employees of a company in consideration of the cost management.

In image processing apparatuses which carry out utilization constraints using an address book, it is determined whether uses of the print functions are limited based on counter values obtained from job logs. In this case, the utilization constraints are carried out for each job. Therefore, the accuracy of the utilization constraint is not immediately obtainable and therefore is degraded.

It is preferable to provide a high utilization constraint function in view of the above natural resources saving, the above cost reduction or the like.

Patent Document 1: Japanese Laid-open Patent Publication No. 2008-186101

### SUMMARY OF THE INVENTION

Accordingly, embodiments of the present invention may provide a novel and useful information processing apparatus, an information processing system, a utilization constraint method, a utilization constraint program, and a recording medium storing the utilization constraint program solving one or more of the problems discussed above to cause functions installed in the information processing apparatuses or the like to be provided with a highly accurate utilization constraint.

Further, the embodiments of the present invention may provide a novel and useful information processing apparatus, an information processing system, a utilization constraint method, a utilization constraint program, and a recording medium storing the utilization constraint program solving one or more of the problems discussed above to cause functions provided from the outside of the information processing apparatus or the like to be provided with a highly accurate utilization constraint.

More specifically, the embodiments of the present invention may provide an information processing system including an information processing apparatus configured to carry out a function related to printing; an authentication management apparatus configured to carry out a user authentication for enabling a user to request to carry out the function of the information processing apparatus; and a predetermined data transmission path configured to connect the information processing apparatus to the authentication management apparatus, wherein the information processing apparatus carries out a process of the function in response to the request from the user and is enabled by reporting operation logs to an outside of the information processing apparatus, and any one of the information processing apparatus and the authentication management apparatus determines whether an execution mode of the process required by the user is changed based on the operation logs.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention as claimed.

### BRIEF DESCRIPTION OF THE DRAWINGS

FIG. 1 illustrates a structural example of an image processing system of Embodiment 1.
FIG. 2 illustrates a hardware structural example of an authentication management apparatus of Embodiment 1.
FIG. 3 illustrates a hardware structural example of an image processing apparatus of Embodiment 1.
FIG. 4 illustrates a structural example of a utilization constraint function of Embodiment 1.
FIG. 5A and FIG. 5B illustrate an example of log data according to Embodiment 1.
FIG. 6A, FIG. 6B, and FIG. 6C illustrate an example of user data according to Embodiment 1.
FIG. 7 is a sequence chart illustrating a procedure of carrying out user authentication according to Embodiment 1.
FIG. 8 is a sequence chart illustrating a procedure of carrying out the user constraint according to Embodiment 1.
FIG. 9 illustrates a structural example of a utilization constraint function of Embodiment 2.
FIG. 10 is a sequence chart illustrating a procedure of carrying out the user constraint according to Embodiment 2.
FIG. 11 illustrates a structural example of an image processing apparatus, a utilization constraint server and a delivery server.
FIG. 12 is a sequence chart illustrating a procedure in an image processing system according to Embodiment 3.
FIG. 13A and FIG. 13B illustrate a structural example of a user data memory unit.
FIG. 14A and FIG. 14B illustrate a structural example of log data.
FIG. 15 is a sequence chart illustrating a procedure in an image processing system according to Embodiment 4.

### DETAILED DESCRIPTION OF THE PREFERRED EMBODIMENTS

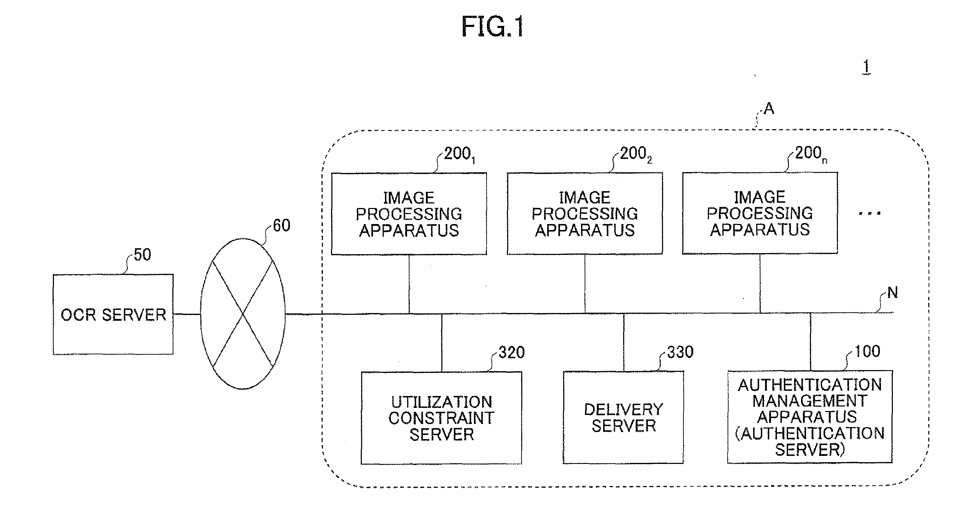

A description is given below, with reference to the FIG. 1 through FIG. 15 of the embodiments of the present invention. Reference symbols typically designate as follows:
1: Information processing system;
11: Log service;
11s: Log holding unit;
12: User information service;
12s: User information holder;
21: Log application;
21s: Log holding unit;
22: Authentication application;
22s: User information holder;
23: External device controlling unit;
24: External device information acquiring unit;
25: Authentication communication unit;
26: Main function unit;
27: Log reporting unit;
28: Main control unit;
31: Log data;
31U: User information:
31M: Apparatus information;
31R: Consumption resource information;
41: User data;
41A: Authentication information;
41L: Utilization constraint information; 50: OCR server;
80a: SD card;
100: Authentication management apparatus (Authentication management server)
101: Input device;
102: Display device;
103: Drive device;
103a: Recording medium;
104: Auxiliary memory device, RAM (Volatile semiconductor memory);
105: Memory device, ROM (Non-volatile semiconductor memory);
106: CPU;
107: Interface device;
108: HDD (Non-volatile memory);
121: Utilization constraint determiner;
122: SDK application;
123: SDK platform;
124: Control service;
125: Operating system (OS);
126: Standard application;
200: Image processing apparatus;
210: Controller (Control board);
211: CPU;
212: Memory device;
212A: RAM;
212B: ROM;
212C: HDD;
213: Network I/F (NIC);
214: External memory I/F;
214a: Recording medium;
220: Operations panel;
221: Utilization constraint determiner;
230: Plotter (Image forming device);
240: Scanner (Manuscript reading device);
250: External device I/F;
250a: External device;
260: Modem;
270: SD card slot;
320: Utilization constraint server;
321: Log service unit;
322: User management service unit;
323: Log memory unit;
324: User data memory unit;
325: Utilization amount coefficient memory unit;
330: Delivery server;
331: Distribution unit;
1211: Scan application;
1212: Print application;
1213: Copy application;
1214: FAX application;
1221: Authentication log application;
1222: Distribution application;
1223: OCR application;
B: Bus;
N: Data transmission path (LAN); and
U: User.

### Embodiment 1

### <System Structure>

A system structure for providing an authentication service of Embodiment 1 is described.

FIG. 1 is a structural example of an information processing system 1 of Embodiment 1. As illustrated in FIG. 1, the information processing system 1 of Embodiment 1 includes an office A, an OCR server 50 positioned outside the office A or the like. The office A includes plural image processing apparatuses 200ₗ to 200ₙ, an authentication management apparatus 100, a utilization constraint server 320, a delivery server 330, and a predetermined data transmission path N such as a local area network (LAN) connecting the plural image processing apparatuses 200ₗ to 200ₙ, the authentication management apparatus 100, the utilization constraint server 320 and the delivery server 330. Hereinafter, the image processing apparatuses 200ₗ to 200ₙ are referred to as image processing apparatuses 200.

A user of the image processing apparatuses 200 belongs to the office A. As described, the wired or wireless network N such as a LAN connects various apparatuses in the office A, e.g. the plural image processing apparatuses 200ₗ to 200ₙ, the authentication management apparatus 100, the utilization constraint server 320 and the delivery server 330, to enable communications among these. The OCR server 50 can communicate with the apparatuses in the office A via the wide area network 60 such as the Internet.

The image processing apparatuses 200 may include a multifunction peripheral (MFP) which realizes functions such as scanning, printing, copying and fax transmitting and receiving in a single casing in response to jobs such as image processing requested by users. In addition to the multifunction peripheral (MFP), the image processing apparatuses 200 may include a laser printer (LP). The authentication management apparatus 100 is an information processing apparatus having a server function of carrying out authentication administration for users who use the image processing apparatuses 200.

The utilization constraint server 320 unifies the utilization constraints of the one or more image processing apparatuses 200. The utilization constraint is provided for legitimate users. The legitimate users are defined as being authenticated and having rights of using the functions to be constrained. In Embodiment 1, the utilization constraint is realized based on the utilization amount of the functions related to the image processing apparatuses 200 to be used by the legitimate user. Based on a comparison between the utilization amount and a set upper limit value, the image processing apparatuses 200 are constrained from being used. The functions subjected to the utilization constraint may include services provided outside the image processing apparatus 200. The utilization amount is an index value determined in response to a use mode (execution mode) of the functions. Therefore, the utilization amounts of the functions differ in response to the use modes even though the functions are the same.

The delivery server 330 is a computer which provides a delivery service to the image processing apparatuses 200 via the network N. The delivery service delivers document data of which delivery is requested to a designated destination. The delivery server 330 can comprehend a logic mechanism of the utilization constraint with the utilization constraint server 320. Said differently, the delivery server 330 requires the existence of the utilization constraint server 320, and is designed to interconnect with the utilization constraint server 320.

The OCR server 50 is a computer which provides an optical character recognition (OCR) service through the network 60. The OCR service provides an optical character recognition (OCR) process to received image data and returns text data resultantly output.

With this system structure, the information processing system 1 realizes the authentication function using a login and logout in the image processing apparatuses 200. Specifically, the user authentication is carried out when the authentication management apparatus 100 and the image processing apparatuses 200 interconnect as follows.

For example, the image processing apparatus 200 displays a login screen on an operations panel of the image processing apparatus 200 and requests a user to input authentication information such as a user ID and a password. The image processing apparatus 200 transmits the input authentication information to the authentication management apparatus 100 upon receipt of the authentication information and requests the authentication management apparatus 100 to perform the user authentication. The authentication management apparatus 100 carries out the user authentication based on the received authentication information upon the request, and sends the authenticated result to the image processing apparatus 200 which has requested the user authentication. The image processing apparatus 200 reports to the user whether the installed functions may be used based on the authenticated result received from the authentication management apparatus 100. The image processing apparatus 200 reports logout of the user after the requested process is completed.

As described, the confidentiality of the image processing apparatuses 200 which are to be used by unspecified user is maintained by the information processing system 1.

In Embodiment 1, a highly accurate utilization constraint is realized for the functions installed in the image processing apparatus 200 under this system environment.

### <Hardware structure>

The hardware structure of the apparatuses constituting the system 1 is described.

### <Authentication management apparatus>

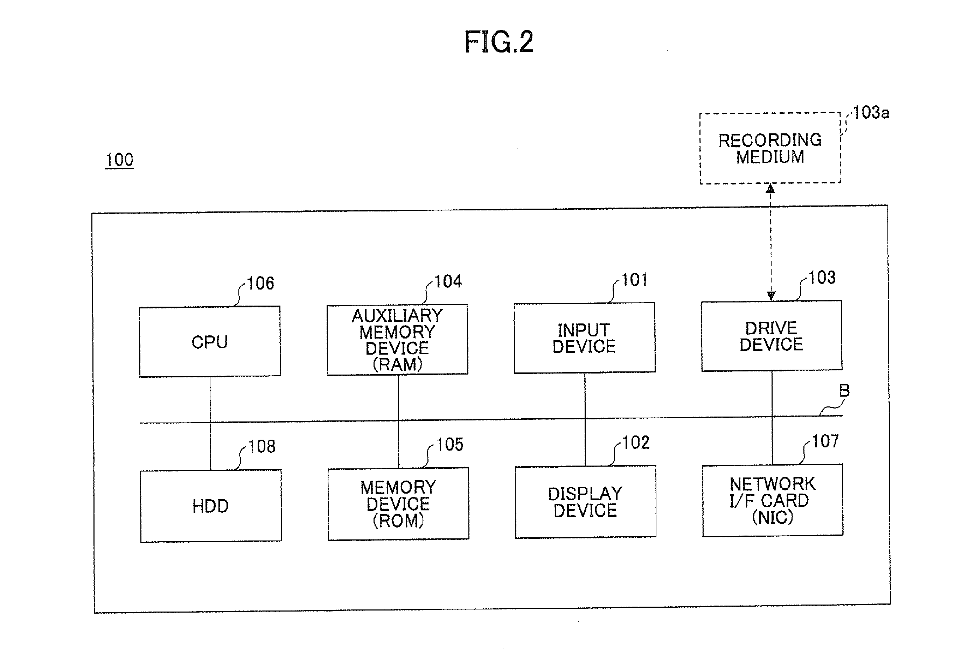

FIG. 2 illustrates a hardware structural example of the authentication management apparatus 100 of Embodiment 1. As illustrated in FIG. 2, the authentication management apparatus 100 includes an input device 101, a display device 102, a drive device 103, an auxiliary memory device (RAM) 104, a memory device (ROM) 105, a central processing unit (CPU) 106, an interface device 107, and a hard disk drive (HDD) 108, which are mutually connected via a bus B.

The input device 101 includes a keyboard and a mouse used to input various operation signals to the authentication management apparatus 100. The display device 102 includes a display or the like to display a processing result, e.g., administrative information obtained in the authentication management apparatus 100.

The interface device 107 is an interface for connecting the authentication management apparatus 100 to a predetermined data transmission path N. Therefore, the authentication management apparatus 100 can carry out data transmission with the image processing apparatus 200 via the interface device 107.

The HDD 108 is a non-volatile memory device storing various programs and data. The stored programs and data may be an operating system which is basic software such as Windows ("Windows" is a registered trademark) and UNIX ("UNIX" (uppercase) is a registered trademark) controlling the entire authentication management apparatus 100 and an application for providing various functions in the information processing system. The HDD 108 administers the above program and data with a predetermined file system and/or a data base (DB).

The drive device 103 is an interface with an attachable and detachable recording medium 103a. With this the authentication management apparatus 100 can read or write information such as data and programs via the drive device 103.

It is possible to provide a program realizing a process in the utilization constraint server 320 recorded in the recording medium 103a such as a CD-ROM. When the recording medium 103a storing a program is loaded into the drive device 103, the program may be installed into the auxiliary memory device 104 from the recording medium 103a via the drive device 103. However, the program does not need to be always installed from the recording medium 103a and may be downloaded from another computer via the network 60. The auxiliary memory device 104 may store necessary files, data and so on in addition to the installed program.

The auxiliary memory device 104 is a volatile semiconductor memory which temporarily holds programs and data read out of the various memory devices. The auxiliary memory device 104 may be a random access memory (RAM). The CPU 106 realizes control and operation of various installed functions of the authentication management apparatus 100 by executing the program held in the auxiliary memory device 104.

The memory device 105 is a non-volatile semiconductor memory which can hold data even when the memory device is powered off. The memory device 105 may be a read only memory (ROM) and store data such as a basic input/output system (BIOS) carried out when the authentication management apparatus 100 is started up and system software and a network related software of the authentication management apparatus 100.

With the hardware structure, the authentication management apparatus 100 executes the program (a software component for realizing the installed function) read in the RAM 104 from the HDD 108 by the CPU 106 and realizes the installed functions.

The authentication management apparatus 100 has a structure substantially the same as the information processing apparatus such as a personal computer (PC).

### <Image processing apparatus>

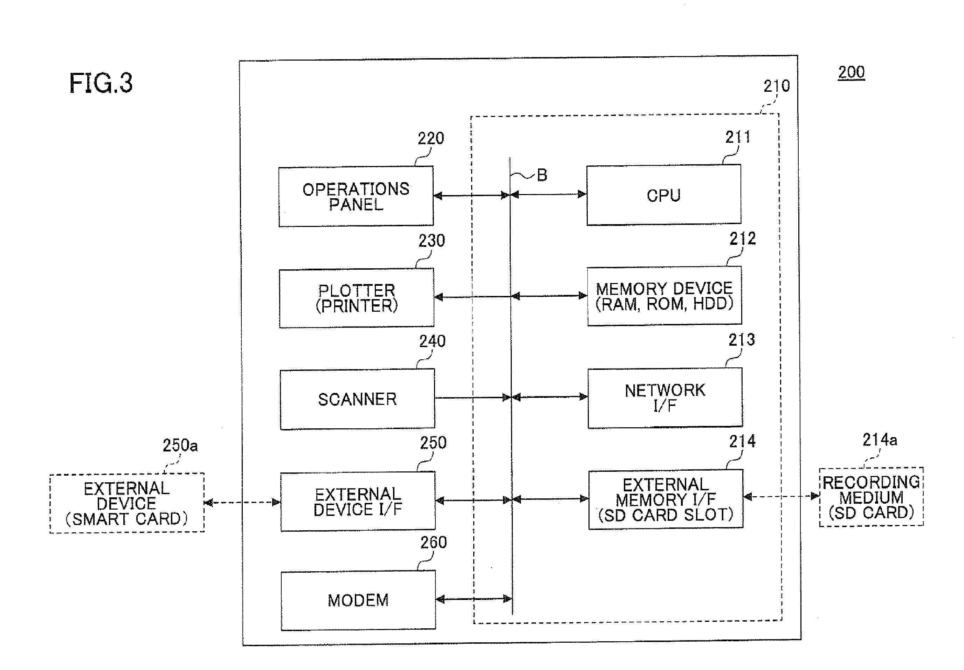

FIG. 3 illustrates a hardware structural example of the image processing apparatus 200 of Embodiment 1. As illustrated in FIG. 3, the image processing apparatus 200 includes a controller 210, an operations panel 220, a plotter 230, a scanner 240, and an external device I/F 250, which are mutually connected via a bus B.

The operations panel 220 includes an input unit such as a touch panel and buttons in addition to a display unit such as a liquid crystal display in order to provide various information items such as apparatus information and receive various user operational information such as operation setups and operating instructions. The operations panel 220 provides various information items such as apparatus information to users and receives various users' operational information items such as operation settings and operating instructions.

The plotter 230 includes an image forming unit for forming an output image on a paper. An example of the plotter 230 is a printer. The printer 13 is hardware for printing the image on printing paper. For example, systems of forming the output image are an electrophotographic system and ink jet system. The scanner 240 optically reads a manuscript and produces a read image.

The external device I/F 250 is an interface which reads memory information from the external device 250a. The external device 250a may be a contactless integrated circuit (IC) such as a smart card.

In office environments, external devices 250a such as an employee ID card and a consent agreement are issued to users who use the image processing apparatuses 200.

In recent years, a radio frequency identification (RFID) is introduced for carrying out authentication administration of persons and objects. RFID is a technique of exchanging information with close-distance radio communications in a frequency band range of several centimeters to several meters using electromagnetic waves and an electromagnetic field.

The external device I/F 250 can read information from the external device 250a using the technique.

The controller 210 includes a CPU 211, a memory device 212, a network I/F 213, and an external memory I/F 214, which are mutually connected via the bus B.

The CPU 211 controls various functions and controls all devices by executing programs. The memory device 212 stores and holds the program and the various data such as "image data". The memory device 212 may be a RAM being a volatile memory, a ROM being a non-volatile memory, and a HDD having a large capacity memory region. The RAM functions as a work area of the CPU 211. The work area is a memory area from which programs and data are temporarily read out. The ROM and the HDD are used as destinations of storing the programs and various data. In the image processing apparatus 200, the CPU 211 reads the program stored in the ROM into the RAM and executes the program.

The network I/F 213 is an interface (hardware) for connecting the image processing apparatus 200 to a predetermined data transmission path N such as a wired or wireless network. The predetermined data transmission path N may be a LAN. With this, the image processing apparatus 200 can communicate with the authentication management apparatus 100 via the network I/F 213.

The external memory I/F 214 is an interface for connecting the recording medium 214a as an external memory. With this the image processing apparatuses 200 can read or write information such as data and programs from or to the recording medium 214a via the external memory I/F 214. The external memory I/F 214 may include an SD card slot or the like. The recording medium 214a may be an SD memory card, a universal serial bus (USB) memory and the like.

The SD card slot as an example of the external memory I/F 214 is used to read a program recorded in the SD card 214a. Not only a program recorded in the ROM 212B as an example of the memory device 212 but also a program recorded in the SD card 214a are loaded into a RAM as an example of the memory device 212 and executed. The SD card 214a may be replaced by another recording medium such as a CD-ROM and a USB memory. Recording media used instead of the SD card 214a may not be specifically limited. In this case, the SD card slot as an example of the eternal memory I/F 214 may be replaced by hardware depending on kinds of the recording media.

The modem 260 is hardware for connecting the image forming apparatus 200 to a telecommunication line and is used for sending and receiving the image data with fax communication.

With the above described hardware structure, the CPU 211 of the image processing apparatus 200 executes the program (a software component for realizing installed functions) read from the ROM 212B into the RAM 212A, and the installed functions are realized by controlling the peripheral devices such as the plotter 230 and the scanner 240 connected by the bus B.

There has been described a case where the image processing apparatus 200 is the MFP in Embodiment 1. For example, when the image processing apparatus 200 is a laser printer (LP), the scanner 240 may not be provided.

The controllers 210 of the image processing apparatuses 200 have structures substantially the same as the information processing apparatus such as a personal computer (PC).

### <Utilization constraint function>

The utilization constraint function of Embodiment 1 is described.

The image processing apparatus 200 of Embodiment 1 issues an operation log of the utilization function carried out in response to a request for using the functions from an authenticated user for each page (page by page). The image processing apparatus 200 updates the value of an accumulated consumption amount quantitatively indicative of an accumulated consumption in response to past requests based on issued operation logs with the newest value. Hereinafter, a consumption amount may have substantially the same meaning as that of the utilization amount. The image processing apparatus 200 compares the updated value (the newest accumulated consumption amount) with the set upper limit value related to consumption (utilization constraint value). As a result, the image processing apparatus 200 instructs to stop operations of the utilization functions for each page based on the result of the comparison as changing of execution mode of the a process required by the user. The image processing apparatus 200 has the above described utilization constraint function.

As an example of the utilization constraint function, it is determined whether a print function is constrained by a utilization expected number by a user or counter values obtained from job logs. According to the method, the controls depend on values input by the user and uses the value lacking instantaneousness. Therefore, it is impossible to provide a highly accurate utilization constraint function.

In the image processing apparatus 200 of Embodiment 1, the utilization constraint is carried out to constrain the utilization function for each page based on operation logs of the installed functions executed for each page in response to the function utilization request from the authenticated user.

With this, the information processing system 1 of Embodiment 1 can carry out the highly accurate utilization constraint of the functions installed in the apparatuses.

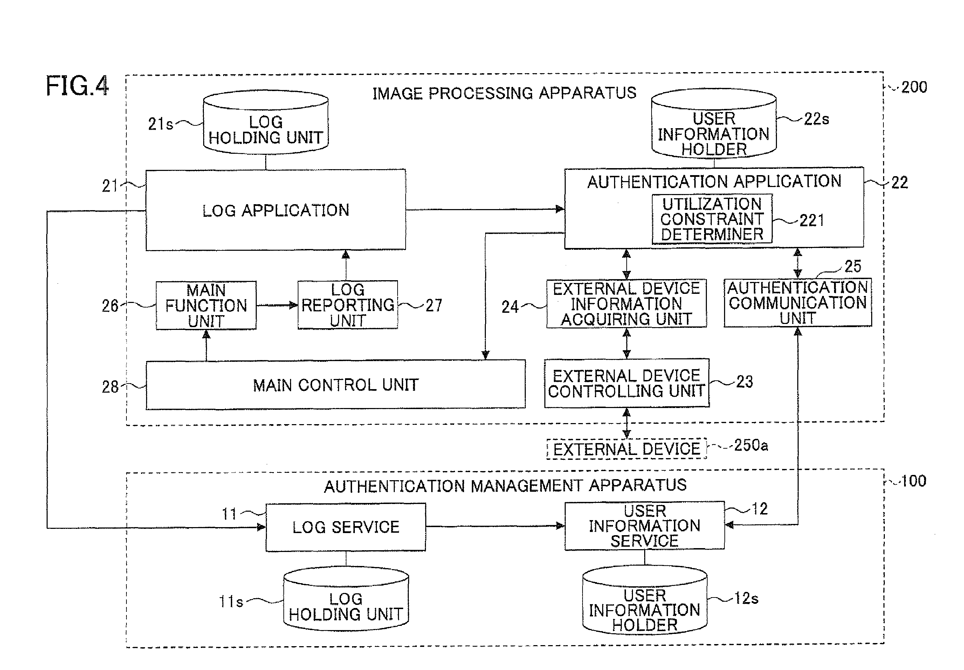

Next, the structure and operation of the utilization constraint function are described. FIG. 4 illustrates a structure of the utilization constraint function of the Embodiment 1. As illustrated in FIG. 4, the devices and units of the authentication management apparatus 100 and the image processing apparatus 200 interconnect to realize the utilization constraint function in the information processing system 1 of Embodiment 1.

### <Authentication management apparatus>

The authentication management apparatus 100 has a log service 11, a user information service 12, or the like.

The log service 11 is a function unit administering the logs collected from the image processing apparatuses 200. The logs may be collected by a passive method of receiving the logs sent from the image processing apparatus 200, an active method of receiving the logs upon a request for acquiring the logs from the image processing apparatus 200, or the like. The log service 11 administers the collected logs by storing and holding the collected logs in a log holding unit 11s. The log holding unit 11s corresponds to a predetermined memory area of the memory device 105, the HDD 108 or the like of the authentication management apparatus 100.

The user information service 12 is a function unit in which various information items of users (hereinafter, referred to as "user information") to be used by the image processing apparatus 200 are administered. The user information service 12 stores or holds the user information in a user information holder 12s to thereby administe the user information by various data operations. The log holding unit 11s corresponds to a predetermined memory area of the memory device 105, the HDD 108 or the like of the authentication management apparatus 100. The user information held in this manner may be operated on using a predetermined administration tool provided by the user information service 12. Therefore, an administrator previously registers information of a target user using the administration tool, and thereafter adds, changes, updates, or deletes registration data to administer the information.

The user information service 12 authenticates the user while administering the information. The user information service 12 authenticates the user based on the authentication information such as "input user ID" and "input password" sent from the image processing apparatus 200 and the user information such as registered authentication information administered by the user information service 12.

Details of the logs and the user information are described in <various data> below.

### <Image processing apparatus>

The image processing apparatus 200 has a log application 21, an authentication application 22, an external device controlling unit 23, an external device information acquiring unit 24, an authentication communication unit 25, a main function unit 26, a log reporting unit 27, a main control unit 28, or the like.

The log application 21 is a function unit administering an operation log issued when the functions installed in the image processing apparatus is operated. The log application 21 receives the operation logs from the log reporting unit 27 to be described later for each page. The log service 11 administers the received logs by storing and holding the received logs in the log holding unit 11s. The log holding unit 21 corresponds to a predetermined memory area of the memory device 105 or the HDD 108 installed in, for example, the image processing apparatus 200.

The log application 21 transmits operation logs received from the log reporting unit 27 to the authentication management apparatus 100. With this the same logs are held and stored in the image processing apparatuses 200 and the authentication management apparatus 100.

The authentication application 22 is a function unit providing an authentication function to a user of the image processing apparatus 200 when the authentication application 22 works with the user information service 12 of the authentication management apparatus 100. The authentication application 22 displays a login screen such as a graphical user interface (GUI) on the operations panel 220 to prompt an input of authentication information. The authentication application 22 requests the user authentication by transmitting the input authentication information to the authentication management apparatus 100 via the authentication communication unit 25 described later. As a result, the authentication application 22 receives an authenticated result from the authentication management apparatus 100. At this time, the authentication application 22 acquires the user information administered by the user information service 12 as the authenticated result when the user is authenticated. The authentication application 22 stores and holds the acquired user information into the user information holder 22s. The user information holder 22s corresponds to a predetermined memory area of the memory device 212 including the HDD 212C installed in, for example, the image processing apparatus 200.

The authentication application 22 determines whether it is necessary to carry out a utilization constraint to the authenticated user. This determination may be carried out by the utilization constraint determiner 221.

Operation logs received by the log application 21 from the log reporting unit 27 are transmitted to the authentication application 22 for each page. The authentication application 22 updates the value of an accumulated consumption amount quantitatively indicative of an accumulated consumption in response to past requests based on the received operation logs as a current value. The utilization constraint determiner 221 determines whether the utilization constraint is necessary by comparing an updated value (the amount of the newest accumulated consumption) with the set upper limit value related to consumption (utilization constraint value). As a result, the authentication application 22 instructs the utilization function to stop the operation for each page (page by page) based on the determination result via the main control unit 28 described below as changing of execution mode of the a process required by the user.

The current value of the accumulated consumption amount and the upper limit of the preset consumption (the utilization constraint value) are included in the user information received as the authenticated result by the authentication application 22 from the authentication management apparatus 100. The authentication application 22 accesses the user information holder 22s and updates the current value included in the user information of the authenticated user. The utilization constraint determiner 221 accesses the user information holder 22s, refers to the upper value included in the user information of the authenticated user, and determines whether the utilization constraint is necessary.

The external device controlling unit 23 is a function unit for controlling the external device I/F 250. The external device information acquiring unit 24 is a function unit which acquires or reads memory information from the external device 250a via the external device I/F 250.

With these function units of the external device controlling unit 23 and the external device information acquiring unit 24, the image processing apparatus 200 may read the authentication information stored in a tag of a noncontact IC card.

The authentication application 22 carries out a user authentication based on the authentication information acquired by the external device information acquiring unit 24 in addition to the user authentication based on the authentication information input from the login screen. The image processing apparatus 200 can carry out the user identification by applying the noncontact IC card as the external device 250a to the external device I/F 250.

The authentication communication unit 25 is a function unit which carries out data communication for the user authentication between the authentication administration apparatus 100 and the image processing apparatus 200. The authentication communication unit 25 may transmit and send the authentication information and the authenticated result via the network I/F 213 of the image processing apparatus 200.

The main function unit 26 is a function unit which provides a predetermined service to a user in the image processing apparatus 200. The image processing apparatus 200 may have a basic function related to inputs and outputs and an extension function associated with the basic function and which is enabled to be added or deleted. In Embodiment 1, the function related to the printing (output) is subjected to the utilization constraint. Therefore, in a case where the image processing apparatus 200 is a MFP, functions such as a copy function, a printer function, and a facsimile function are collectively referred to as the main function unit 26.

The log reporting unit 27 is a function unit which issues and reports operation logs of the main function unit 26 operated in response to a function request from the authenticated user for each page. When the main function unit 26 receives a request for the copy function from the authenticated user, the log reporting unit 27 issues and reports the operation logs as follows. When a document having five pages is copied once, five operation logs are issued and reported in the order of the processed pages. When a document having five pages is copied five times, twenty-five operation logs are issued and reported in the order of the processed pages. With this, the log application 21 receives the operation logs for each page in the order of processing the pages in the main function unit 26.

The main control unit 28 is a function unit realizing an operation environment (platform) of the main function unit 26. The main control unit 28 controls starting, stopping, and ending of the main function unit 26. Said differently, a life cycle of the functions installed in the image processing apparatus is controlled. With this, the operation of the main function unit 26, i.e. utilization function, may be stopped in conformity with the instruction from the authentication application 22 as changing of execution mode of the a process required by the user.

### <Various data>

The logs and the user information held by the various holding units, i.e. the log holding unit 11s, the user information holder 12s, the log holding unit 21 s, the user information holder 22s or the like are described.

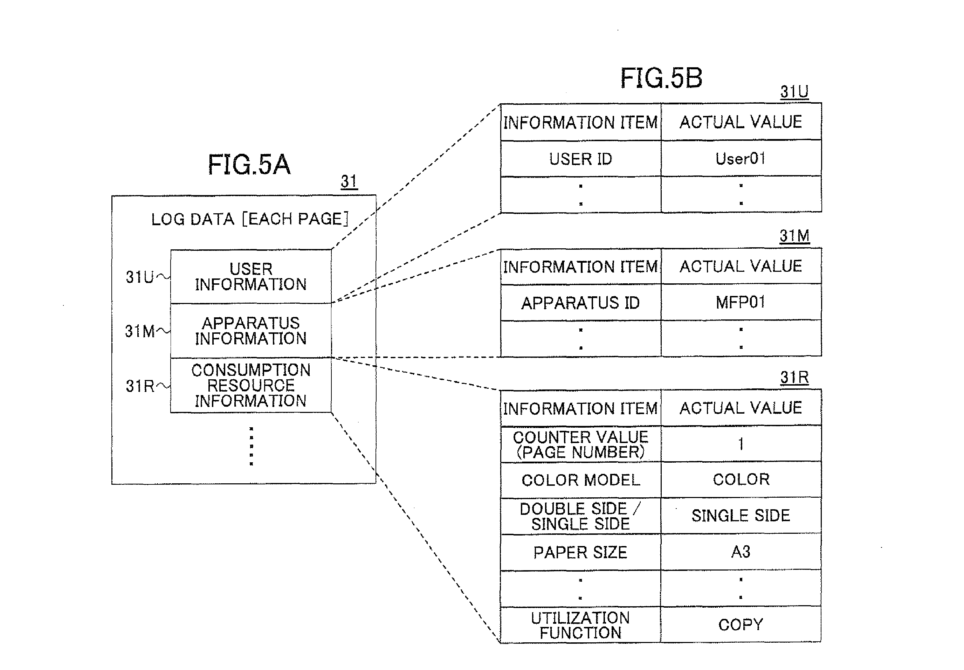

FIG. 5 illustrates an example of log data 31 of Embodiment 1. Referring to FIG. 5, the log data (operation log) 31 are issued and reported for each page from the log reporting unit 27. As described, the log data 31 are stored in and administered by the log holding unit 21s and the log holding unit 21 s. The log data 31 are transferred from the log application 21 to the authentication application 22 at a timing issued and reported by the log reporting unit 27. The log data 31 are collected by the authentication management apparatus 100 and stored in the log holding unit 11s.

Referring to FIG. 5A, the log data 31 include user information 31U, apparatus information 31M, and consumption resource information 31R.

These user information 31U, apparatus information 31M, and consumption resource information 31R include actual values (actual data) corresponding to the following information items.

The user information 31U relates to an authenticated user who has requested operation and includes values corresponding to a user identification item such as "user ID". The value of the user identification item (user identification information) is information by which an authenticated user is identified. The value of the user identification item may be a user ID illustrated in FIG. 5B and a user name.

The apparatus information 31 M relates to the image processing apparatus 200 in which functions operate. The apparatus information 31M includes an apparatus identification item such as "apparatus ID". The value of the apparatus identification item (apparatus identification information) may be the apparatus ID illustrated in FIG. 5B, an apparatus name, and any information by which a used apparatus is identified.

Consumption resource information 31R relates to a resource consumed by the request operation, and includes values corresponding to various consumption resource items such as "page number", "color model", "double side or single side", "paper size", and "function to be used". These consumption resource items may be different depending on the functions. Referring to FIG. 5B, there is illustrated a value obtained when a manuscript having a size "A3" and one page is copied once in "color" and "single side" in a data example of the consumption resource item.

In Embodiment 1, the log data 31 with the above structure are issued for each page by the log reporting unit 27. With this, a consumption resource per page in the print function is acquired in the image processing apparatus 200.

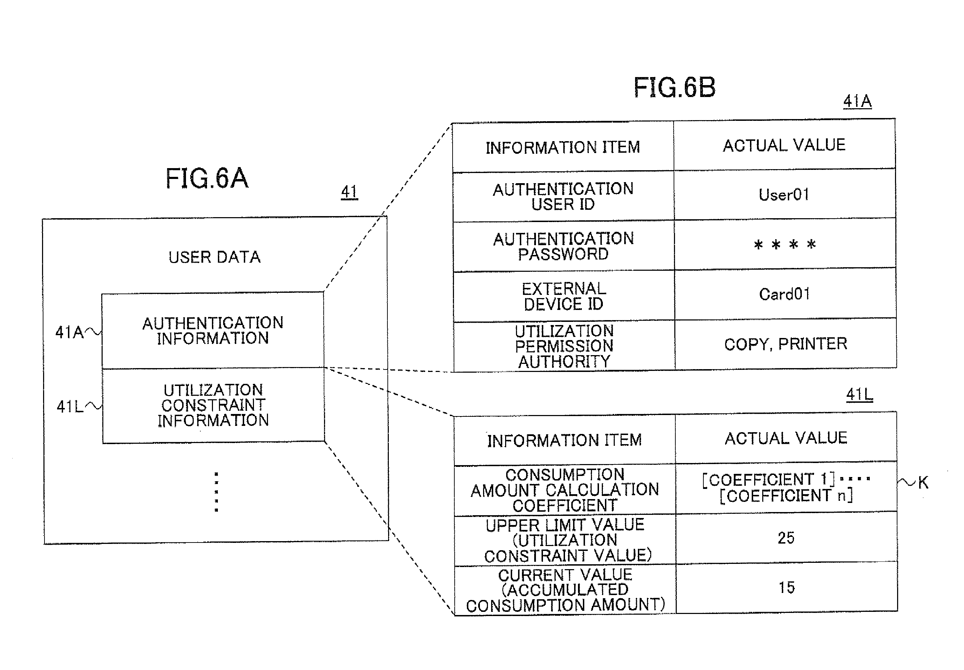

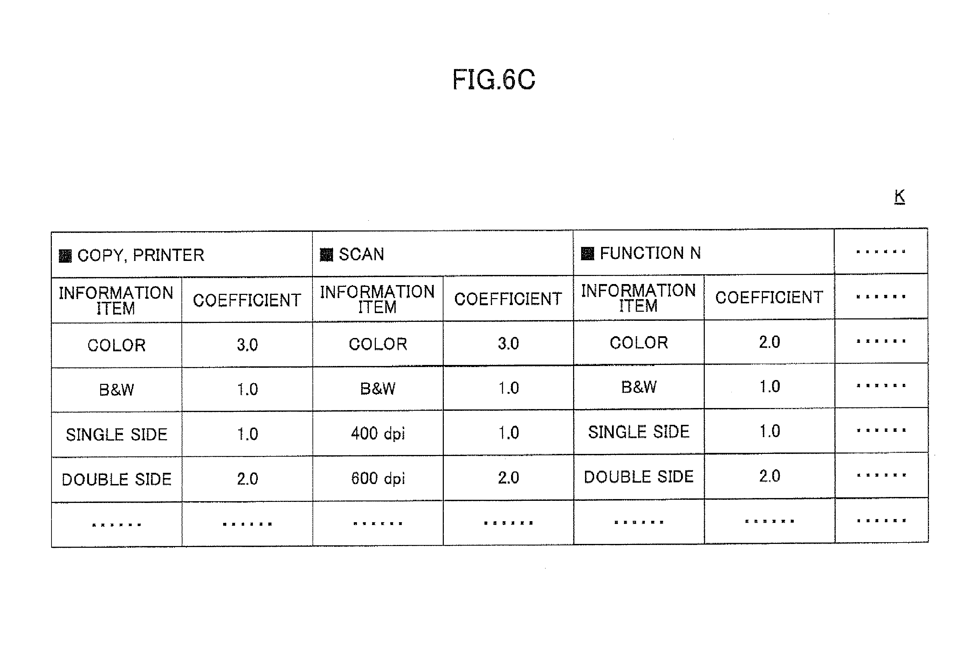

FIG. 6 illustrates an example of log data 41 of Embodiment 1. The user data 41 illustrated in FIG. 6 are stored in and administered by the user information service 12 and the user information holder 12s. The user data 41 are transmitted from the authentication management apparatus 100 to the image processing apparatus 200 when the user is authenticated and are referred to by a utilization constraint determiner 221 included in the authentication application 22.

Referring to FIG. 6A, the user data 41 include authentication information 41 A and utilization constraint information 41 L.

These authentication information 41 A and utilization constraint information 41 L are formed by actual values (actual data) corresponding to the following information items.

The authentication information 41 A is information related to the user authentication and includes values corresponding to various authentication items such as an authenticated user ID, an authentication ID, an authentication password, an external device ID, and a utilization permission authority. In the item of "external device ID", a value identifying the external device 250a used for identifying the user authentication (i.e. external device identification information) is set. A function permitting utilization of the authenticated user (i.e. authority information) is set in the item of the "utilization permission authority". Referring to FIG. 6B, in a data example of the authentication items, the external device 250a is identified as "Card01". The user is authenticated by the authentication user ID "User01" and the password "****". The utilization permission authority is registered.

An external service of the image processing apparatus 200 may be permitted to be used only when identification information of the service such as a service name is included.

The utilization constraint information 41L is information related to a utilization constraint provided for a user and may include values corresponding to various utilization constraint items such as a consumption amount calculation coefficient, an upper limit value (utilization constraint value), and a current value (accumulated consumption amount). In items of the consumption amount calculation coefficients, a coefficient K for calculating the consumption amount (values added to the accumulated consumption amount by the present time) per page is provided. The coefficient K may have a table structure illustrated in FIG. 6C.

The current value is an accumulated value of the utilization amount obtained by adding when the image processing apparatus 200 is used or an external service is used via the image processing apparatus 200. The predetermined period may be a periodically sectioned period such as one month or a period continuing after the image processing apparatus 200 is first installed. In the former case, the current value may be periodically initialized to zero. In the latter case, the current value is not initialized after the image processing apparatus 200 is installed.

The upper limit value designates the upper limit of the utilization amount up to which the utilization of the function is not constrained. It is determined whether the utilization constraint is necessary by comparing the current value with the upper limit value. It is possible to comprehend the upper limit value as a point given to the user. In this case, the addition of the current value corresponds to consumption of the points. The current value reaching the upper limit value corresponds to exhaustion of the point.

Referring to FIG. 6C, the coefficients K are determined for each of the items, "color", "black and white (B&W)", "single side", and "double side" for each function and each print mode. Referring to FIG. 6C, when a color copy is carried out in the data example of FIG. 6C, the coefficient of "3.0" is used to calculate the consumption amount per page. When the color print is carried out using the function N, the coefficient "2.0" is used to calculate the consumption amount per page.

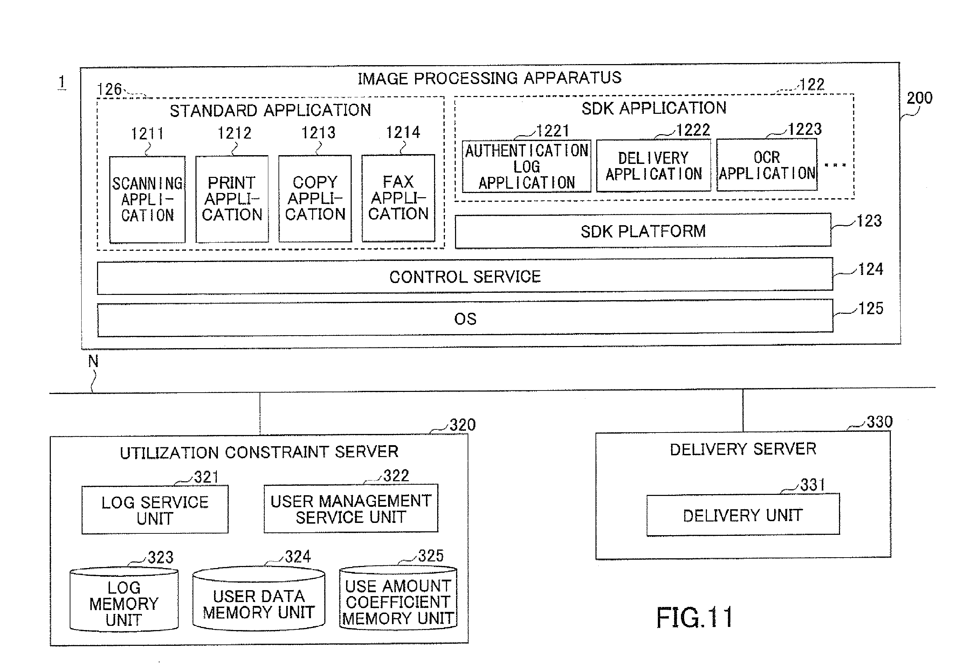

Referring to FIG. 6C, the structural example of the utilization amount coefficient information related to the scan function is illustrated. The utilization amount coefficient information includes a coefficient used for calculating a utilization amount related to scanning of one page in response to each value of the attribute items. Referring to FIG. 6C, coefficients "3.0", "1.0", "1.0", and "2.0" are sequentially determined respectively for color, B&W, 400 dpi, and 600 dpi. The values of the attribute items of the functions designate information indicative of utilization modes of the functions. In consideration of a formula (described later) for calculating the utilization amount by multiplying values and the coefficients, a utilization amount coefficient memory unit 25 illustrated in FIG. 11 records a utilization amount substantially in response to the utilization mode of the functions. Referring to FIG. 6B, other items such as a paper size are omitted for convenience. Some items may not have coefficients.

As described, it is possible to weight the consumption amount per page in the item of "consumption amount calculation coefficient" when the utilization function is carried out.

In the item of the upper limit value (utilization constraint value), the maximum consumption amount for determining whether the utilization constraint is necessary is provided. In the item of the current value (accumulated consumption amount), a value obtained by accumulating the consumption amount calculated using the coefficients upon the request information is provided. The value quantitatively indicates the accumulated consumption upon the request operations from the past to the present. Therefore, an initial value of the current value is "0". The current value is accumulated every operation for each page and increases when the operations are carried out. Referring to FIG. 6B, in the data example of the utilization constraint items, the consumption amount of the print function per page is calculated using "coefficient 1" through "coefficient n". The upper limit value "25" is registered by a user to determine whether the utilization constraint is to be carried out.

The user data 41 administers the user data 41 with the authentication management apparatus 100 and the user information service 12. As such, the image processing apparatus 200 carries out the utilization constraint in the user authentication and the print function.

As described, the utilization constraint function is realized when the various function units interconnect with each other and the above data are used to process.

A detailed operation of the utilization constraint function with interconnections of the function units is described using a sequence diagram illustrating procedures.

The utilization constraint function is realized when programs being software components for the utilization constraint function installed in the authentication management apparatus 100 and the image processing apparatus 200 are read to the memory device such as the RAM 104 and 212 from a storage source such as the ROM 105 and 212 by the CPU 106 and 212, and the following processes are carried out. In the following, the user authentication process and the utilization constraint process are sequentially described.

### <User authentication process>

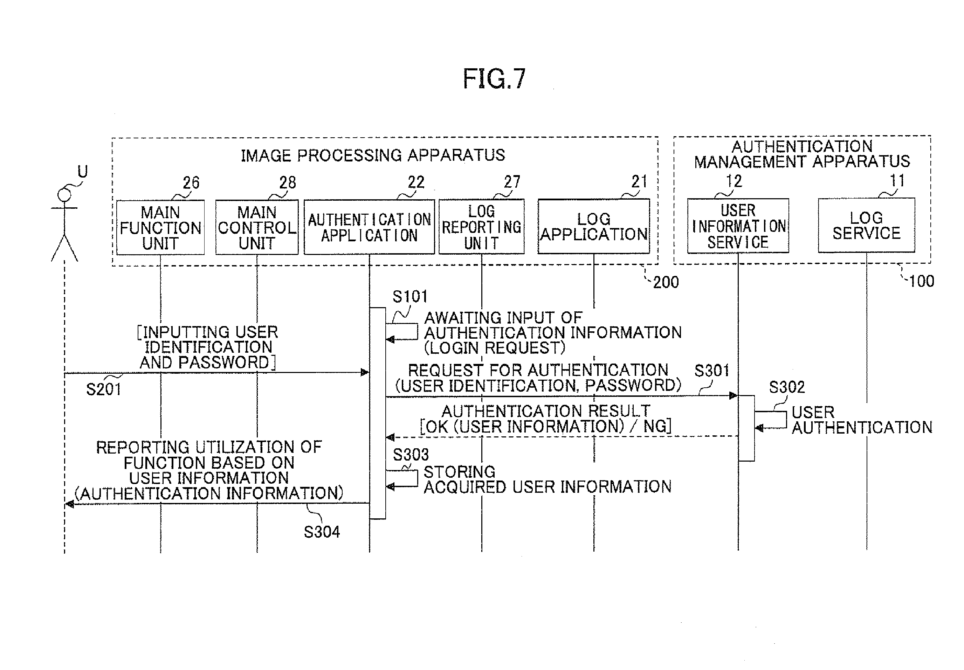

FIG. 7 is a sequence diagram indicative of an example of carrying out the user authentication in Embodiment 1. In the information processing system 1 of Embodiment 1, the authentication management apparatus 100 and the image processing apparatus 200 carry out the following user authentication.

The image processing apparatus 200 displays a login screen on the operations panel 220 of the image processing apparatus 200 with an authentication application 22 and awaits an input of the authentication information from a user U in step S101.

The authentication application 22 receives authentication information such as user identification information and a password input by the user U via the login screen in step S201.

The authentication application 22 requests the authentication management apparatus 100 to transmit user authentication by transmitting the received authentication information to the authentication management apparatus 100 in step S301.

The authentication management apparatus 100 responds to the image processing apparatus 200 requesting to transmit an authenticated result after carrying out a user authentication based on received authentication information and user data 41 held in the user information holder 12s in step S302. The authenticated result is returned to an image processing apparatus 200 which requests the authenticated result. The user information service 12 carries out the user authentication as follows. The user information service 12 accesses the user information holder 12s and specifies the user data 41 corresponding to the user U based on the user identification information included in the received authentication information. The user information service 12 compares the password contained in the received authentication information with a set value of the "authentication password" of the authentication information 41 A included in the specified user data 41 to thereby carry out the user authentication. After the password matches and the user U is authenticated, the specified user data 41 are transmitted to the image processing apparatus 200.

The image processing apparatus 200 receives the authenticated result from the authentication management apparatus 22 by the authentication application 22. If the user U has been authenticated, the received user data 41 are stored in the user information holder 22s in step S303.

The authentication application 22 displays a utilization permitted function screen for reporting functions permitted to be used after the authentication to the user U based on the set value of the "utilization permission authority" of the authentication information 41A included in the stored user data 41. For example, the authentication application 22 reports the copy and printer functions to the user U as the functions to be permitted to be used after the authentication when the authentication application 22 receives the user data 41 illustrated in FIG. 6A as the authenticated result.

On the other hand, the authentication application 22 displays an authentication error screen reporting that the user U has not been authenticated on the operations panel 220.

The user U logs into the image processing apparatus 200 of the information processing system 1 with the above procedure to thereby enable utilization of the functions installed in the image processing apparatus 200.

### <Utilization constraint process>

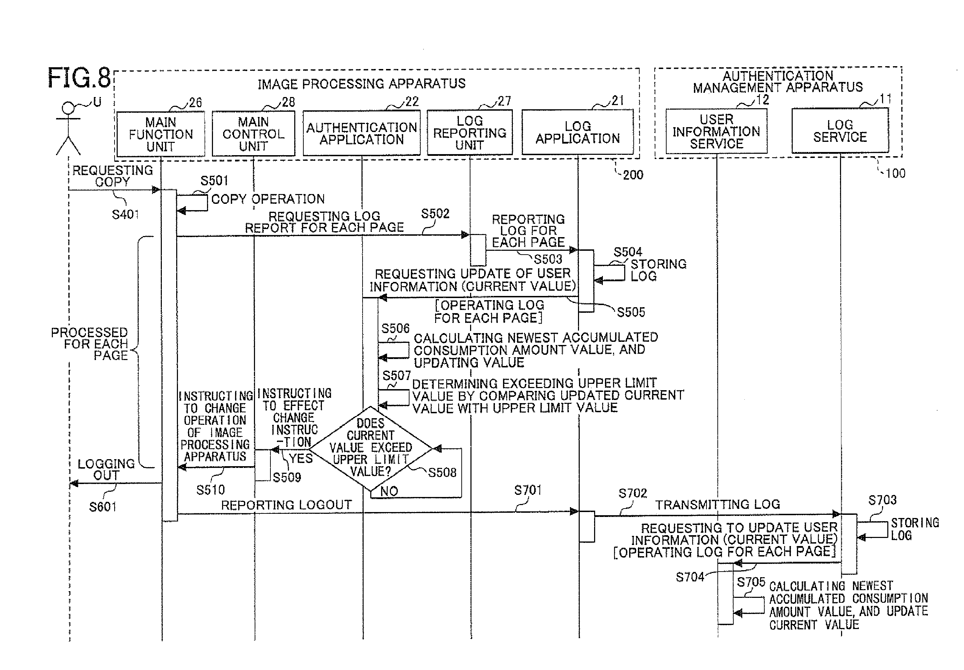

FIG. 8 is a sequence diagram indicative of an example of carrying out the user authentication in Embodiment 1. Thereafter, in the information processing system 1 of Embodiment 1, the authentication management apparatus 100 and the image processing apparatus 200 carry out the following utilization constraint process. Next, a user U who has been authenticated is referred to as an "authenticated user U". The process in a case where the authenticated user U requests one single-sided color copy of a manuscript of six pages is described. In this, the main function unit 26 has the copy function.

As illustrated in FIG. 8, the image processing apparatus 200 receives a copy request from the authenticated user U in step S401. Then, the main function unit 26 starts a request operation of the copy function in step S501.

The image processing apparatus 200 carries out the processes of step S502 to step S510 at every completion of one-page copy operations as described below in order to constrain the utilization of the copy function.

The main function unit 26 requests the log reporting unit 27 to issue and report the log data 31 related to the copy operations for each page (page by page) in step S502 after every completion of the one-page copy operations.

The log reporting unit 27 issues and reports the log data 31 for each page upon requests to the log application 21 in step S503.

The log application 21 stores the issued and reported log data 31 in the log holding unit 21s in step S504.

Thereafter, the log application 21 requests the authentication application 22 to update the value of "current value (accumulated consumption amount)" included in the utilization constraint information 41L of the user data 41 with the newest value in step S505. The log application 21 requests the authentication application 22 to update the user data 41 by transmitting the log data 31 for each page to the authentication application 22.

The authentication application 22 calculates the value of the newest accumulated consumption amount including the one-page copy operation carried out based on the log data 31 for each page upon the request, and updates the current value (accumulated consumption amount) with the calculated value in step S506 as a calculating and updating unit.

The authentication application 22 calculates the consumption amount per one page to be added to the accumulated consumption amount up to the present time for the copy operation based on the value of the consumption resource information 31R included in the log data 31 and the coefficient K (set value) of the "consumption amount calculation coefficient" included in the utilization constraint information 41 L of the user data 41. The authentication application 22 may operate as follows when the consumption amount for each page is calculated after the copy operation is carried out.

When it is requested by the authenticated user U to copy one single-sided color copy in the image processing apparatus 200, the authentication application 22 refers to "consumption amount calculation coefficient K" of the utilization constraint information 41L included in the user data 41 based on the "color" of "color model", "single side" of "double side / single side", and "copy" of "utilization function" of the consumption resource information 31R included in the log data 31, and acquires the coefficients "3.0" and "1.0" for calculating the consumption amount for each page. The authentication application 22 calculates 3.0×1.0×1 pages to obtain the consumption amount for each page of "3.0" as the result of the copy operation using the coefficients "3.0" and "1.0".

When one double-sided color copy of a manuscript of six pages is requested by the authenticated user U, the authentication application 22 refers to "consumption amount calculation coefficient K" of the utilization constraint information 41L included in the user data 41 based on the "color" of "color model", "double side" of "double side / single side", and "copy" of "utilization function" of the consumption resource information 31R included in the log data 31, and acquires the coefficients "3.0" and "2.0" for calculating the consumption amount for each page. The authentication application 22 calculates 3.0×2.0×1 page to obtain the consumption amount for each page of "6.0" as the result of the copy operation using the coefficients "3.0" and "2.0".

As described, the authentication application 22 calculates the consumption amount for each page upon receiving the request for operations.

Then, the authentication application 22 adds the calculated consumption amount "3.0" to the value of 15 of the "current value (accumulated consumption amount)" included in the utilization constraint information 41L of the user data 41 to obtain the newest accumulated consumption amount of 18 as 15+3. The current value is updated by the newest accumulated consumption amount of 18.

As described, the authentication application 22 updates the value of the accumulated consumption amount quantitatively indicative of the accumulated consumption of the past request operations with the consumption amount for each page of the current request operation.

The authentication application 22 determines whether the updated value being the newest accumulated consumption amount exceeds the set value of "upper limit value (utilization constraint value)" included in the utilization constraint information 41 L of the user data 41 in step S507 as a determining unit.

As described, the authentication application 22 determines whether the utilization constraint is carried out by comparing an updated value being the newest accumulated consumption amount with the set upper limit value being the utilization constraint value related to the consumption using the utilization constraint determiner 221.

For example, the authentication application 22 operates when it is determined whether the utilization constraint for the copy function is carried out based on the user data 41.

The utilization constraint determiner 221 refers to 25 of the "upper limit value (utilization constraint value)" included in the utilization constraint information 41L of the user data 41 and compares 25 with the updated value of 18. As a result, the utilization constraint determiner 221 determines that the utilization constraint of the copy function is not to be carried out since the updated value does not exceed the upper limit value, that is, 25>18.

As described, when the updated value does not exceed the upper limit value in NO of step S508, it is determined that the utilization constraint of the copy function is not to be carried out, and the next page is continuously processed.

On the other hand, when the updated value exceeds the upper limit value in YES of step S508, it is determined that the utilization constraint of the copy function is to be carried out by the utilization constraint determiner 221 of the authentication application 22.

For example, after the image processing apparatus 200 continues the copy operation and the copy operation of the fourth page ends, the "current value (accumulated consumption amount)" included in the utilization constraint information 41 L of the user data 41 is updated by the newest accumulated consumption amount of 27 in step S506. As a result, the utilization constraint determiner 221 determines that the utilization constraint of the copy function is to be carried out since the updated value exceeds the upper limit value, that is, 25<27.

When the authentication application 22 determines that the utilization constraint is to be carried out, the authentication application 22 instructs the main control unit 28 to stop the copy function based on the determination result in step S509 as changing of execution mode of the a process required by the user. The main control unit 28 instructs the main function unit 26 to stop the operation of the main function unit 26 as changing of execution mode of the a process required by the user upon receipt of the instruction in step S510 as an operation changing unit.

In the image processing apparatus 200 of Embodiment 1, the utilization constraint may be carried out to constrain the utilization function for each page based on operation logs of the installed functions executed for each page in response to the function utilization request from the authenticated user.

The main function unit 26 displays a logout screen for reporting to the operations panel 200 a logout after the operation of the copy function is stopped in step S601 as changing of execution mode of the a process required by the user. Further, the logout is reported to the log application 21 in step S701.

The log application 21 transmits the log data 31 for each page which have been stored in the log holding unit 21s until the function of the authentication management apparatus 100 is subjected to the utilization constraint upon receipt of the report in step S702.

The authentication management apparatus 100 stores the received log data 31 in the log holding unit 11s by the log service 11 in step S703.

Thereafter, the log service 11 requests the user information service 12 to update the current value (accumulated consumption amount) included in the utilization constraint information 41L of the user data 41 held by the user information holder 12s in step S704. Then, the log service 11 requests the authentication application 12 to update the user data 41 by transmitting the log data 31 for each page to the user information service 12.

The user information service 12 calculates the value of the newest accumulated consumption amount including the copy operation carried out based on the log data 31 for each page upon receiving the request, and updates the current value (accumulated consumption amount) with the calculated value in step S705.

As described, the information processing system 1 integrally administers the user information held by the authentication management apparatus 100 and the image processing apparatus 200.

As described, in the image processing apparatus 200, when the request for utilizing the function is received from the user U, the log reporting unit 27 issues the operation log (the log data 31) carried out upon the request for each page. The image processing apparatus 200 updates the accumulated consumption amount value quantitatively indicative of the accumulated consumption in response to past requests based on the issued operation logs with the newest value as the current value. The image processing apparatus 200 compares the updated value being the newest accumulated consumption amount with the set upper limit value being the utilization constraint value related to the consumption and determines the utilization constraint for the user U. As a result, the image processing apparatus 200 instructs to change operations of the utilization functions for each page based on the result of the comparison. The changing the operations may be stopping the operations.

Thus, in the image processing apparatus 200 of Embodiment 1, the utilization constraint is carried out to constrain the utilization function for each page based on operation logs of the installed functions executed for each page (page by page) in response to the function utilization request from the authenticated user U.

With this, the information processing system 1 of Embodiment 1 can carry out the highly accurate utilization constraint of the functions installed in the apparatuses such as the image processing apparatuses 200.

### Embodiment 2

In Embodiment 1, there is described the structure in which the image processing apparatus 200 has the utilization constraint function. The update of the accumulated consumption amount held by the authentication management apparatus 100 may cause a time lag in Embodiment 1. This is because the value of the accumulated consumption amount is in synchronization with a timing when the authenticated user logs out from the image processing apparatus 200.

In this case, there is a probability that the accuracy of the utilization constraint is badly influenced because, when an identical user uses two different image processing apparatuses 200 to carry out requested functions, the utilization constraint may be determined using the accumulated consumption amount which is not updated by the newest value.

In consideration of the above, there is proposed a structure in which an authentication management apparatus 100 commonly used for plural image processing apparatuses 200 has a utilization constraint function.

The same reference symbols are used for the same portions of Embodiment 1, and description of these portions is omitted.

### <Utilization constraint function>

The utilization constraint function of Embodiment 2 is described.

In the authentication management apparatus 100, operation logs (log data 31) of a utilization function issued for each page is received from the image processing apparatus 200 in which the utilization function installed in the image processing apparatus 200 is carried out in response to a request for utilizing the utilization function from the user U. The image processing apparatus 100 updates the value of an accumulated consumption amount quantitatively indicative of an accumulated consumption in response to past requests based on received operation logs with the newest value. The image processing apparatus 100 compares the updated value (the newest accumulated consumption amount) with a set upper limit value of consumption related to consumption (utilization constraint value), and determines a utilization permission. As a result, the image processing apparatus 100 instructs to stop operations of the utilization functions of the image processing apparatus 200 for each page (page by page) based on the result of the determination as changing of execution mode of the a process required by the user. The authentication management apparatus 100 has the above described utilization constraint function.

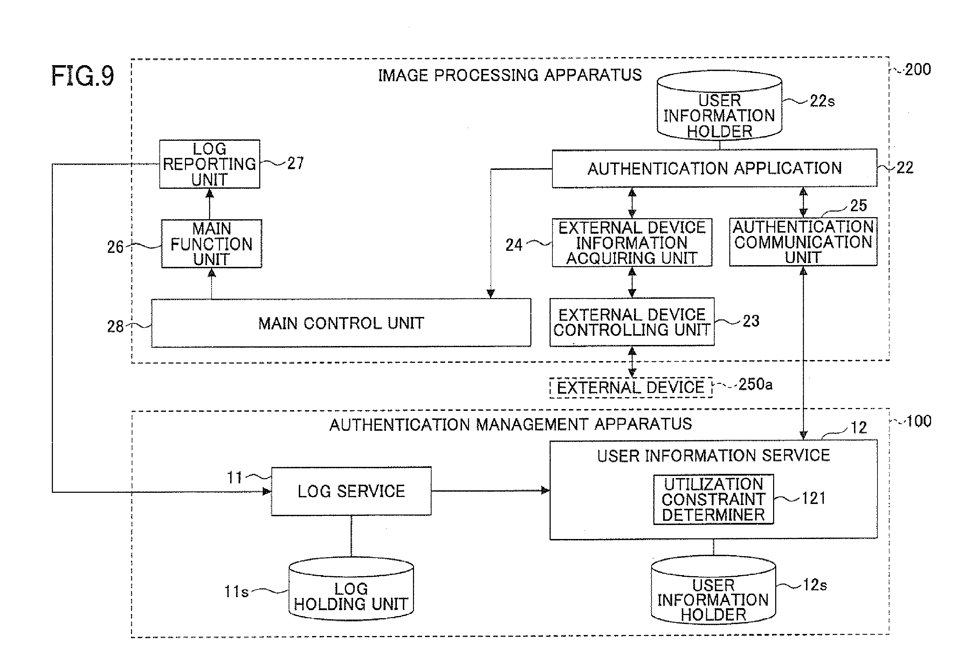

Next, the structure and operation of the utilization constraint function are described. FIG. 9 illustrates a structural example of the utilization constraint function of Embodiment 2. As illustrated in FIG. 9, differences between Embodiment 1 and Embodiment 2 are that a user information service 12 has a utilization constraint determiner 121 and that the image processing apparatus 200 does not have the log application 21 and the log holding unit 21s.

Because the user information service 12 has the utilization constraint determiner 121 in the authentication management apparatus 100, a utilization constraint process is carried out by the authentication application 22 and not in the image processing apparatus 200 of Embodiment 1. The "utilization constraint process" has an update of an accumulated consumption amount based on operation logs (log data 31), a determination of carrying out the utilization constraint based on a newest accumulated consumption amount and an upper limit value (utilization constraint value), and an instruction of stopping operation for each page based on the determination result as changing of execution mode of the a process required by the user. These are similar to those described in Embodiment 1.

The update of the accumulated consumption amount based on the operation logs (log data 31) is carried out by receiving operation logs for each page which are issued and transmitted by a log reporting unit 27 of the image processing apparatus 200. The operation logs transmitted from the image processing apparatus 200 are stored by a log holding unit 11s and transmitted to the user information service 12 by a log service 11 of the authentication management apparatus 100. The user information service 12 carries out the utilization constraint process based on the received operation logs.

The authentication management apparatus 100 instructs the utilization function to stop operation for each page based on the determination result obtained by the utilization constraint determiner 121 of the user information service 12 as changing of execution mode of the a process required by the user. Then, the authentication management apparatus 100 requests an instruction of issuing a function stop command to the image processing apparatus 200 in which the utilization function operates and instructs to stop the operation of the utilization function for each page as changing of execution mode of the a process required by the user. When it is determined to carry out the utilization constraint by the utilization constraint determiner 121, the user information service 12 transmits the determination result to the authentication application 22 via an authentication communication unit 25 of the image processing apparatus 200. As a result, in the image processing apparatus 200, the authentication application 22 instructs effecting the function change command to a main control unit 28 and instructs to stop operation of the utilization function in a main function unit 26 as changing of execution mode of the a process required by the user.

As described, the utilization constraint function of Embodiment 2 is realized by interconnections of these various function units.

Next, a detailed operation of the utilization constraint function with interconnections of the function units is described using a sequence diagram illustrating procedures.

The utilization constraint function is realized when programs being software components for the utilization constraint function installed in the authentication management apparatus 100 and the image processing apparatus 200 are read into a memory device such as the RAM 104 and 212 from a storage source such as the ROM 105 and 212 by the CPU 106 and 212, and the following processes are carried out. Hereinafter, description of a user authentication process similar to Embodiment 1 is omitted and only the different utilization constraint process is described. In the utilization constraint process, step S502 to step S511 are described.

### <Utilization constraint process>

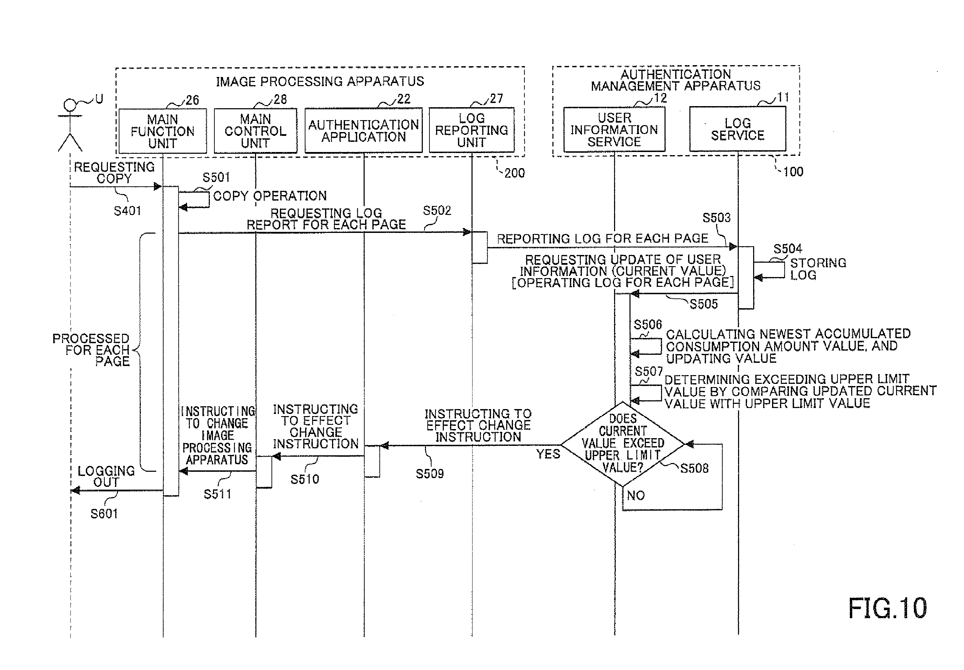

FIG. 10 is a sequence diagram indicative of an example of carrying out the user authentication in Embodiment 2. The main function unit 26 of the image processing apparatus 200 requests the log reporting unit 27 to issue and report the log data 31 related to the copy operations for each page in step S502 after every completion of the one-page copy operations.

The log reporting unit 27 issues and reports the log data 31 for each page upon request to the authentication management apparatus 100 in step S503.

The authentication management apparatus 100 stores the received log data 31 in the log holding unit 11s by the log service 11 in step S504 as a log receiving unit.

Thereafter, the log service 11 requests the user information service 12 to update a current value (accumulated consumption amount) included in the utilization constraint information 41L of the user data 41 held by the user information holder 12s in step S505. Then, the log service 11 requests the authentication application 12 to update the user data 41 by transmitting the log data 31 for each page to the user information service 12.

The user information service 12 calculates the value of the newest accumulated consumption amount including the one-page copy operation carried out based on the log data 31 for each page upon request, and updates the current value (accumulated consumption amount) with the calculated value in step S506 as a calculating and updating unit Detailed descriptions of a calculation of consumption amount for each page and an update of an accumulated consumption amount are omitted because these are the same as those of step S506 illustrated in FIG. 8.

The user information service 12 determines whether the updated value being the newest accumulated consumption amount, which is updated by the utilization constraint determiner 121, exceeds the set value of "upper limit value (utilization constraint value)" included in the utilization constraint information 41L of the user data 41 is step S507, as the determining unit.

As described, the user information service 12 determines whether the utilization constraint is to be carried out by comparing the updated value being the newest accumulated consumption amount with the set upper limit value being the utilization constraint value related to consumption using the utilization constraint determiner 121.

When it is determined that the utilization constraint is to be carried out in YES of step S508, the user information service 12 requests the image processing apparatus 200 to effect an instruction of stopping the copy function as changing of execution mode of the a process required by the user in step S509 as the operation change requesting unit (operation change requesting unit). At this time, the user information service 12 transmits the determination result to the authentication application 22 via the authentication communication unit 25 of the image processing apparatus 200.

The image processing apparatus 200 instructs to effect an instruction of stopping a copy function to the main control unit 28 by the authentication application 22 in step S510 as changing of execution mode of the a process required by the user. The main control unit 28 instructs the main function unit 26 to stop the operation of the main function unit 26 upon receipt of the instruction in step S511 as changing of execution mode of the a process required by the user.

In the image processing apparatus 100 of Embodiment 2, the utilization constraint is carried out to constrain the utilization function of the image processing apparatus 200 for each page (page by page) based on operation logs of the installed functions executed for each page in response to the function utilization request from the authenticated user U.

### Embodiment 3

A software structure of Embodiment 3 is described. FIG. 11 illustrates a structural example of an image processing apparatus 200, a utilization constraint server 320, and a delivery server 330.

Referring to FIG. 11, the image processing apparatus 200 includes a standard application 126, an SDK application 122, an SDK platform 123, a control service 124, and an OS 125.

The standard application 126 is a group of applications ordinarily preinstalled in the image processing apparatus 200. Referring to FIG. 11, the standard application 126 includes a scan application 1211, a print application 1212, a copy application 1213, and a FAX application 1214. The scan application 1211 carries out a scanning job. The print application 1212 carries out a printing job. The copy application 1213 carries out a copying job. The FAX application 1214 carries out facsimile transmitting and receiving jobs.

The control service 124 is a software module group providing functions for controlling various hardware resources to upper applications. The control service 124 may include a network communication function, a scanner control function, a printer control function, a memory administration function, or the like.

The SDK application 122 is an application additionally installed as a plug-in to expand functions of the image processing apparatus 200 after delivering the image processing apparatus 200. Referring to FIG. 11, an authentication log application 1221, a delivery application 1222, an OCR application 1223, or the like are exemplified. The authentication log application 1221 of the SDK application 122 carries out processes for realizing the utilization constraint of the image processing apparatus 200 in association with the utilization constraint server 320. Specifically, the authentication log application 1221 carries out processes related to an authentication of a user who operates the image processing apparatus 200 and a record of log data of the image processing apparatus 200. The log data of Embodiment 3 are an example of utilization information indicative of utilization of functions of the image processing apparatus 200 and an external service outside the image processing apparatus 200, and utilization modes of the functions.

Essential processes related to the user authentication and a record of the log data are carried out in the utilization constraint server 320. Said differently, the authentication log application 1221 receives inputs of the user information such as user IDs and passwords and sends requests for the authentication of the user information to the utilization constraint server 320. Further, the authentication log application 1221 transmits the log data related to a process (job) of the function of the image processing apparatus 200 to the utilization constraint server 320 in response to execution of the process of the image processing apparatus 200. When a failure of the authentication is reported or a transmission of the log data, the process may be instructed to be changed by the authentication log application 1221. The authentication log application 1221 constrains utilization of the image processing apparatus 200 by a user.

The delivery application 1222 of the SDK application 122 makes the image processing apparatus 200 carry out a continuous process flow including readout of image data from a manuscript using a scanner 240 and delivery of the scanned image data as a single job. However, the delivery is undertaken by the delivery server 330. The delivery application 1222 carries out the delivery process using the delivery server 330.

The OCR application 1223 of the SDK application 122 makes the image processing apparatus 200 carry out a continuous process flow including readout of image data from a manuscript using a scanner 240 and an OCR process of the scanned image data as a single job. Said differently, the OCR application 1223 carries out the OCR process using the OCR server 50.

The SDK platform 123 provides an execution environment of the SDK application 122. The SDK applications 122 are developed by using an application program interface (API) provided by the SDK platform 123. For example, the SDK platform 123 provides an interface for enabling use of the scan function, an interface for enabling use of the print function, an interface for enabling use of copy function, or the like to the SDK application 122. The SDK platform 123 is opened to public. Therefore, the SDK application 122 may be developed by a third-party vendor or the like.

The OS 125 is a so-called operating system (OS). Various software applications in the image processing apparatus 200 operate as processes or threads in the OS 125.

The utilization constraint server 320 includes a log service unit 321, a user management service unit 322, a log memory unit 323, a user data memory unit 324, a utilization amount coefficient memory unit 325, and so on.

The log service unit 321 receives the log data transferred by the authentication log application 1221 of the image processing apparatus 200 and records the received log data into the log memory unit 323. The log service unit 321 calculates utilization amounts of functions (service) of the image processing apparatus 200 and functions provided outside the image processing apparatus 200 by the users U and records accumulated amounts of the utilization amounts in the user data memory unit 324 for each user. The accumulated amount is obtained by adding a present utilization amount to past utilization amounts. The log service unit 321 further determines whether the utilization constraint of the image processing apparatus 200 is to be carried out based on a comparison between the accumulated amount and the upper limit value recorded in the user data memory unit 324 for each user.

The user management service unit 322 carries out an authentication of the image processing apparatus 200 based on the user information transferred from the authentication log application 1221, and returns an authenticated result to the authentication log application 1221.

The log memory unit 323 stores the log data into an auxiliary memory device (not illustrated). The user data memory unit 324 stores user data into the auxiliary memory device for each user. The user data include correct user information including user IDs and passwords checked at the time of user authentication and the upper limit value. The user data may be preset by an administrator. The utilization amount coefficient memory unit 325 stores the utilization amounts corresponding to utilization modes for each function of the image processing apparatus 200 and each external service into the auxiliary memory device. The utilization mode may have page numbers processed by the function and values of attribute items of the function. The contents of the utilization modes differ depending on the functions.

The delivery server 330 includes a delivery unit 331. The delivery unit 331 carries out a delivery process of document data received via the network.

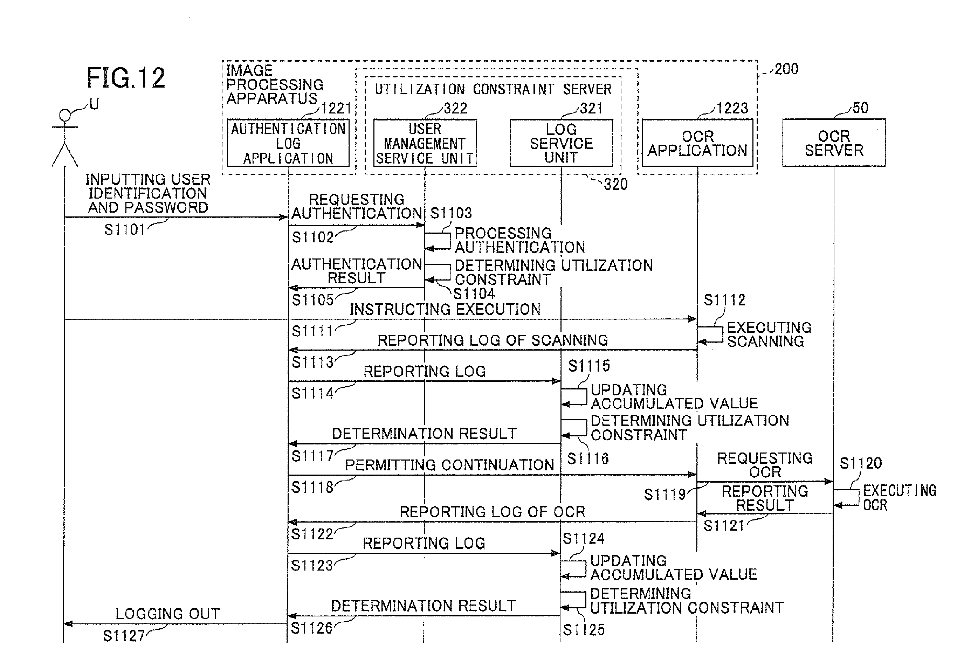

Hereinafter, the procedure of the information processing system 1 is described. FIG. 12 is a sequence chart illustrating a procedure in the image processing system 200 of Embodiment 3. The procedure is executed by CPUs (not illustrated) of the units corresponding to the functional blocks.

In a steady state in which the image processing apparatus 200 is not utilized after the image processing apparatus 200 is started up or the user logs out, the authentication log application 1221 makes the operations panel 220 display a login screen. User information such as user IDs and passwords are input by a user U through the login screen in step S1101. The authentication log application 1221 transmits an authentication request having the input user information to the user management service unit 322 of the utilization constraint server 320 in response to the input of the user information in step S1102. The user management service unit 322 checks the user information included in the authentication request against the user information recorded in the user data memory unit 324 to authorize the user in step S1103.

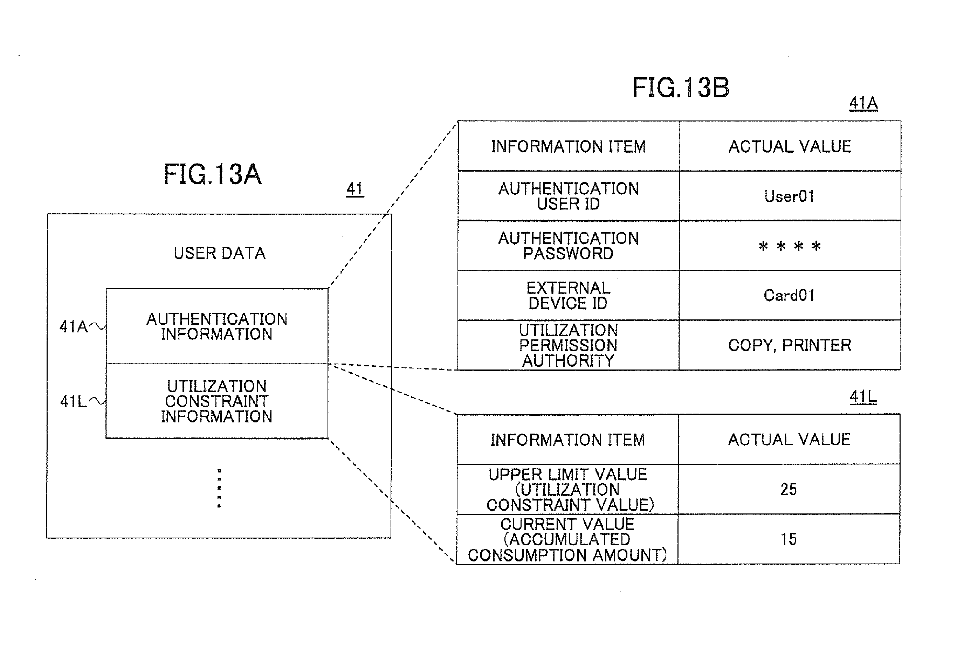

FIG. 13A and FIG. 13B illustrate a structural example of the user data memory unit 324. In the data structure of the user data 41, descriptions of the portions which are the same as those described in reference to FIG. 6A and FIG. 6B are omitted.

The authenticated user ID and the authentication password are correct user information checked against the input user information. Said differently, the user ID and the password are checked against the authenticated user ID and the authentication password. A function (authority information) of permitting utilization for an authenticated user is set in the item of "utilization permission authority".

On the other hand, the consumption amount calculation coefficient is included in the utilization constraint information 41L in FIG. 6, but the consumption amount calculation coefficient is not included in the utilization constraint information 41L in FIG. 13. However, the consumption amount calculation coefficient may be included in the utilization constraint information 41 L in FIG. 13 or stored in another memory.

When the authentication succeeds in step S1103, the user management service unit 322 determines whether the utilization constraint is to be carried out based on a comparison between the current value of user data corresponding to the authenticated user and the upper limit value in step S 1104. Specifically, when a relationship of current value to upper limit value is established as the current value has reached the upper limit value, it is determined that the utilization constraint is to be carried out. In this case, a response indicative failure of the authentication is returned to the authentication log application 1221. In this case, the authentication log application 1221 refuses the login by the user.

On the other hand, when the current value is less than the upper limit value, the user management service unit 322 returns a response indicating a success of the authentication to the authentication log application 1221 in step S1105. At this time, the user data of the successfully authenticated user (login user) are returned to the authentication log application 1221. This is because the access control is carried out based on the utilization permission authority included in the user data. The authentication log application 1221 having received the response indicative that the successful authentication permits login by the user U and makes a list screen of the SDK application 122 display on the operations panel 220.

When the OCR application 1223 is selected by the user U as an object of execution from the SDK list screen, and an execution instruction of the OCR application 1223 is input in step S1111, the OCR application 1223 makes the scanner 240 read a manuscript set in the scanner 240 and acquires electronic data (image data) indicative of the read image. The execution instruction of the OCR application 1223 may contain a set value of the attribute item related to the OCR application 1223. For example, in the SDK list screen, when an icon corresponding to the OCR application 1223 is selected, the OCR application 1223 makes a setup screen of the OCR application 1223 display on the operations panel 15. The user U inputs set values for the attribute items of the OCR application 1223 through the setup screen. When a start key of the operations panel 15 is pressed, the execution instruction in conformity with the input set values is reported to the OCR application 1223. The attribute items for the OCR application 1223 may be B&W or color, resolution, or the like. Set values of the attribute items such as language, horizontal or vertical writing, or the like related to the OCR service may be included.

The OCR application 1223 reports the log data indicative of the utilization of the scan function to the authentication log application 1221 in step S1113.

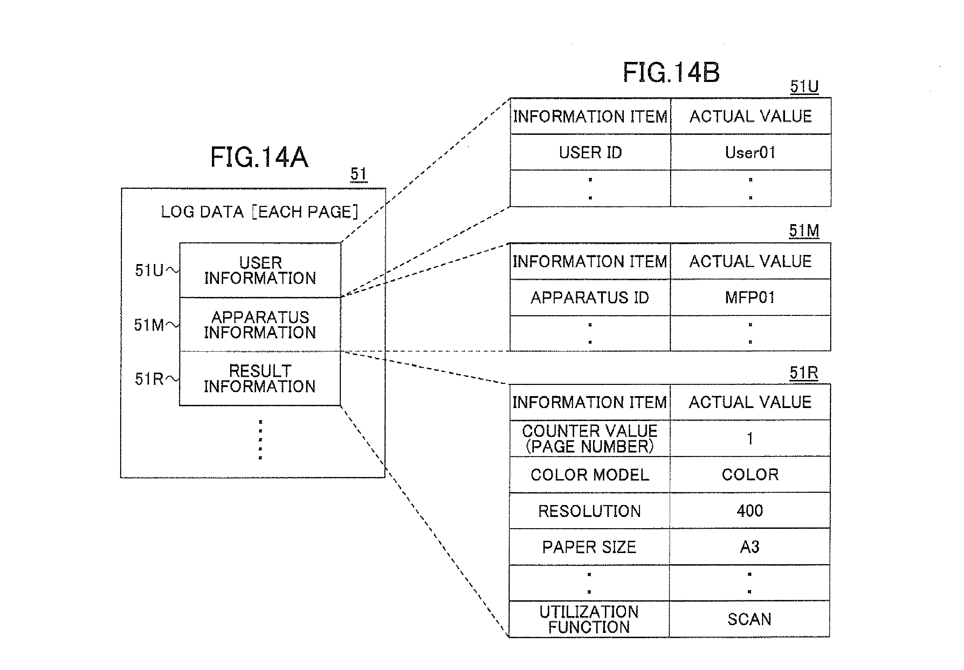

FIG. 14A and FIG. 14B illustrate a structural example of log data. Referring to FIG. 14, the log data 51 include user information 51U, apparatus information 51 M, and result information 51R. The user information 51U, the apparatus information 51M, and the result information 51R are substantially the same as the user information 31U, the apparatus information 31M, and the consumption resource information 31R illustrated in FIG. 5, respectively. Therefore, redundant descriptions are omitted. The contents of the result information 51R in FIG. 14B are different from the contents of the consumption resource information 31R because the utilization functions are different between the copy function and the scan function.

The result information 51R is an actual value of attribute items related to the utilization function utilized by the login user. The structures of the attribute items are different in response to the functions. The actual values of the attribute items may include that are not explicitly set by the user U as the set value. For example, the page number is determined by an actual value of the attribute information which is automatically determined by the image processing apparatus 200. In any one of the attribute items, the actual value and the set value may differ. In consideration of a users' benefit, a value different from the set value may be automatically employed as the actual value. For example when color is designated and a manuscript is B&W, the scan function is carried out in a mode of B&W. Referring to FIG. 14B, the attribute information related to the scan function may include a page number (the number of sheets scanned by the scanner), a color model (B&W or color), a resolution, and a paper size. The utilization function is a utilized function or identification information (name) of a utilized service.

Referring to FIG. 12, the authentication log application 1221 transfers the reported log data 51 to the log service unit 321 of the utilization constraint server 320 in step S1114. The log service unit 321 records the received log data 51 in the log memory unit 323.

Thereafter, the log service unit 321 updates the current value (accumulated utilization amount) of the user data based on the received log data 51 in step S1115.

Specifically, the utilization amount coefficient information corresponding to the utilization function of scannig included in the result information 51R of the log data 51 is acquired by the utilization amount coefficient memory unit 325.

The log service unit 321 calculates the utilization amount using the utilization amount coefficient information described in Embodiment 1 in reference to FIG. 6C. Specifically, the log service unit 321 acquires coefficients for the actual values of the attribute items of the scan function which are stored in the result information 51R of the log data 51 and obtains the products of the coefficients and the page numbers. For example, based on the result information 51R illustrated in FIG. 14 and the utilization amount coefficient information illustrated in FIG. 6C, a coefficient of 3.0 is acquired for color of the color model. A coefficient of 1.0 is acquired for a resolution of 400 dpi. The page number is 1. Therefore, the utilization amount is calculated as 3.0×1.0×1 = 3.0. The log service unit 321 stores a value obtained by adding the calculated utilization amount to the pending current value of the user data to the user data as a new current value.

Thereafter, the log service unit 321 compares the new current value with the upper limit value and determines whether the utilization constraint for the login user is carried out in step S1116. It can be arbitrarily determined whether the utilization is to be constrained when a relationship of current value > upper limit value is established or when a relationship of current value □ upper limit value is established depending on operations. Next, the log service unit 321 returns the determination result of the utilization constraint to the authentication log application 1221 in step S1117.

When the determination result indicates that the utilization constraint is not to be carried out, the authentication log application 1221 transmits a response indicating a permission of continuously executing the process to the OCR application 1223 in step S1118 in response to the report of the log data 51 in step S1113. Then, in response thereto, the OCR application 1223 transits an execution request of OCR for the scanned image data to the OCR server 50 in step S1119. The execution request may include set values of the scanned image data and attribute items of the OCR service.

Then, the OCR server 50 carries out the OCR process in conformity with the set value in step S1120 and returns the execution result of the OCR process to the OCR application 1223 in step S1121. The execution result may include information indicative of success of the OCR process, text data as the OCR result, the actual values for the attribute items of the OCR process, and information (e.g. server name) about an apparatus actually carrying out the OCR process such as the OCR server 50. Subsequently, the OCR application 1223 reports the log data indicative of the utilization of the OCR service to the authentication log application 1221 in step S1122. The contents of the user information 51U and the apparatus information 51 M are common to those described in reference to FIG. 14. The result information 51 R includes information inherent to the OCR service. For example, the received execution result is included.

Referring to FIG. 12, the authentication log application 1221 transfers the reported log data 51 to the log service unit 321 of the utilization constraint server 320 in step S1123. The log service unit 321 records the received log data 51 to the log memory unit 323.

Thereafter, the log service unit 321 updates the current value (accumulated utilization amount) of the user data based on the received log data 51 in step S 1124. The updated current value is the same as the current value updated in step S1115. As illustrated in FIG. 13, the current values are administered for each user, not for each function. However, it is possible to separately administer current values for internal functions of the image processing apparatus 200 and current values for external functions of external services other than the image processing apparatus 200. In this case, the user data may have separate upper limit values respectively for the internal functions and the external functions.

In step S1124, the utilization amount coefficient information for the OCR service related to the service name of the OCR service is acquired as described in reference of FIG. 6C. Then, the utilization amount is calculated based on the coefficients. The utilization amount coefficient information has the coefficients for each attribute item of the OCR service. Therefore, in a similar manner to the scan function, the products obtained by using the coefficients corresponding to the actual values are calculated as the utilization amount and added to the current value. The utilization amount may be fixed regardless of the actual values of the attribute items. The utilization amount coefficient information may have only one fixed value such as 1.0. In this case the fixed value is added to the current value as the utilization amount.

Steps S 1125 and S1126 may be similar to steps S1116 and S1117. However, step S1126 is processed only when the determination result indicating that the utilization constraint is to be carried out is returned to the authentication log application 1221. Said differently, step S1126 is processed only when the current value exceeds the upper limit value.

When the returned determination result indicates that the utilization constraint is to be carried out, the login is released in step S1127. Said differently, the authentication log application 1221 makes the login user forcibly log out of the image processing apparatus 200. As a result, the login screen is displayed on the operations panel 15. The process of the OCR application 1223 is forcibly stopped in the process of releasing the login, namely the logout process as changing of execution mode of the a process required by the user.

Thereafter, if the user tries to perform login afresh, the login is refused based on the comparison result between the current value and the upper limit value in step S1104.

The processes on and after step S1112 may be continuously carried out for each sheet of the manuscript or each of the processes on and after step S1112 may be carried out for all sheets of the manuscript. In the former case, it is possible to minutely determine whether the utilization constraint is to be carried out. Said differently, the determination may be carried out for each sheet of the manuscript. In the latter case, it is possible to diminish the amount of communications between the image processing apparatus 200 and the utilization constraint server 320.

As described, according to Embodiment 3, it is possible to administer the utilization constraint for the external functions (services) provided outside the image processing apparatus 200. Therefore, it is possible to prevent the external functions (services) from being unlimitedly used.

The utilization amount (the current value) and the upper limit value can be used for plural functions, and basically provided one by one for each user. The utilization amount (the consumption amount relative to the upper limit value) can be reasonably calculated in response to modes of utilizing the functions. Therefore, in comparison with the case where the utilization amounts and the upper limit values are administered for each function, it is possible to properly ensure flexibility in expanding the functions. Specifically, when a new function to be subjected to the utilization constraint is additionally installed, it is sufficient to set utilization amount coefficient information for the new function without setting other parameters such as an upper limit value.

In Embodiment 3, the utilization amounts and the upper limit values are exclusively administered by the utilization constraint server 320, and the determinations of whether the utilization constraints are to be carried out are exclusively administered by the utilization constraint server 320. Therefore, it is possible to intensively determine whether the utilization constraints are to be carried out in an environment in which plural image processing apparatuses 200 are installed.

### Embodiment 4

Descriptions of portions of Embodiment 4 similar to those of Embodiment 3 are omitted. These portions of Embodiment 3 may be similarly applicable to Embodiment 4.

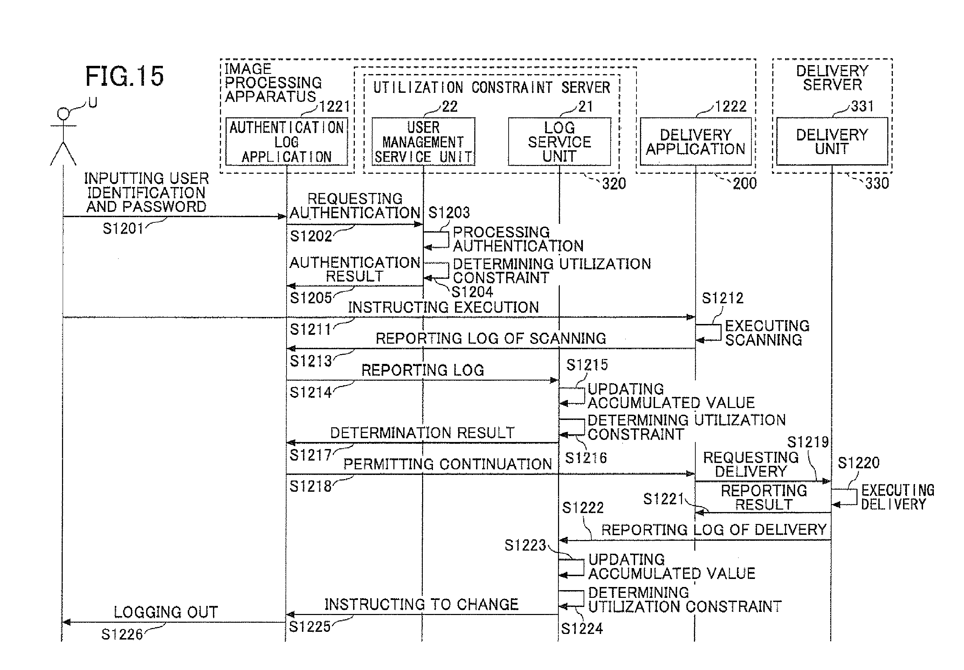

FIG. 15 is a sequence chart illustrating a procedure in the image processing system 200 of Embodiment 4. The procedure is executed by CPUs (not illustrated) of units corresponding to functional blocks.

Steps S1201 to S1218 are similar to steps S1101 to S1118 of FIG. 12 in Embodiment 3 except that the SDK application 122 is a delivery application 1222 in Embodiment 4. Therefore, descriptions of steps S1201 to S1218 are omitted.

After step S1218, the delivery application 1222 transmits a delivery request for scanned image data to a delivery unit 331 of a delivery server 330 in step S219. The execution request may include set values of the scanned image data and attribute items of the delivery service. The delivery request includes user information 51U and apparatus information 51M included in log data 51 as illustrated in FIG. 14.

Thereafter, the delivery unit 331 carries out a delivery process in response to the set values in step S 1220 and returns an execution result of the delivery process to the delivery application 1222 in step S1221. The execution result includes information indicative of whether the delivery process is successfully carried out. Then, the delivery unit 331 transmits log data indicative of utilization of the delivery service to a log service unit 321 in step S1222. The log service unit 321 records the received log data 51 into the log memory unit 323.

In Embodiment 4, the log data are directly transmitted from an entity of providing the service positioned outside the image processing apparatus 200 to the log service unit 321. This is because the delivery unit 331 is installed so that the delivery unit 331 can comprehend an interface (API) of the log service unit 321 of a utilization constraint server 10 and communicate with the log service unit 321. The contents of the user information 51U and the apparatus information 51M of the log data 51 are transferred from the delivery application 1222 along with the delivery request in step S1219 by the delivery application 1222. The contents of the user information 51U and the apparatus information 51M of the log data 51 are common to those described in reference to FIG. 14. On the other hand, the result information 51R includes information inherent to the delivery service. For example, an actual value for an attribute item of the delivery service or the like may be included in the result information 51R.

Steps S1223 and S1234 are similar to steps S1124 and S1125 of FIG. 12. Steps S1124 and S1125 of Embodiment 3 are similarly applicable to steps S1223 and S1234 in Embodiment 4, and therefore descriptions of steps S1223 and S1234 are omitted. In step S1223, utilization amount coefficient information is used to calculate a utilization amount.

When it is determined that the utilization constraint is to be carried out in step S1224, the log service unit 321 inputs an instruction of stopping the process (job) into the authentication log application 1221 in step S1225 as changing of execution mode of the a process required by the user. In conformity with the stop instruction, the authentication log application 1221 releases a login of a login user in step S1226. As a result, the login screen is displayed on the operations panel 15. The process of the delivery application 1222 is forcibly stopped in the process of releasing the login, namely the logout process as changing of execution mode of the a process required by the user.

As described, the log data may be directly transferred to the log service unit 321 from an external service. In this case, it is possible to reduce a processing load on the image processing apparatus 200.

In Embodiments 1 to 4, the cases where the upper limit values and the utilization amounts are administered for each user. However, only one upper limit value and only one accumulated utilization amount are administered for plural users. The plural users may be all users in an office A or each group of users among the plural groups obtained by dividing all users of the office A into the plural groups. When accumulated utilization amounts are administered for each user and different upper limit values are not prepared for each user, it is sufficient to administer only one upper limit value common to the plural users.

When the accumulated utilization amount exceeds the upper limit value, it is not limited to always carrying out a forcible logout (a change of the job). It is sufficient to change a mode of executing the job (the process) with any kind of method. For example, it is possible to display predetermined information such as a message indicating that the accumulated utilization amount exceeds the upper limit value. This is because the predetermined information may motivate the user to voluntarily constrain the utilization of the function. It is also possible to carry out the utilization constraint by changing or downgrading the values of the attribute items. Specifically, in the scan function, the resolution may be lowered or B&W scanning be permitted even if color scanning is requested. In the delivery function, data may be compressed and delivered. In the print function, B&W printing is permitted even if color printing is requested in the color model, or low consumption printing may be selected to reduce a consumption amount of paper and ink by using double-sided printing, consolidated printing, or the like.

As described, in the authentication management apparatus 100, operation logs (log data 31) of the utilization function issued for each page are received from the image processing apparatuses 200 in which the utilization function installed in the image processing apparatus 200 is carried out in response to the request for utilizing the utilization function from the user U. The user information service 12 of the authentication management apparatus 100 updates the value of the accumulated consumption amount quantitatively indicative of the accumulated consumption in response to past request operations based on received operation logs with the newest value. The authentication management apparatus 100 compares the updated value being the newest accumulated consumption amount which is updated by the utilization constraint determiner 121 of the user information service 12 with the set upper limit value being the utilization constraint value related to the consumption and determines the utilization constraint for the user U. As a result, the user information service 12 of the authentication management apparatus 100 instructs to stop operations of the utilization functions of the image processing apparatus 200 for each page (page by page) based on the result of the determination as changing of execution mode of the a process required by the user.

In the authentication management apparatus 100, the utilization constraint is carried out to constrain the utilization function of the image processing apparatus 200 for each page based on operation logs of the installed functions executed for each page in response to the function utilization request from the authenticated user U.

With this, the information processing system 1 can carry out the highly accurate utilization constraint of the functions installed in the apparatuses such as the image processing apparatuses 200.

The "utilization constraint function" of the information processing system is carried out when programs coded by a program language suitable for operation environments (platforms) of the authentication management apparatus 100 and the image processing apparatus 200 are executed by the CPU 106 and the CPU 211 to perform the procedure described above.

These programs may be stored in the computer readable recording media 103a and 214a. The recording media 103a may be a floppy disc ("floppy" is a registered trademark), a compact disc, a digital versatile disk, or the like. The recording medium 214a may be an SD memory card, a universal serial bus (USB) memory, or the like.

Therefore, when the programs are stored in the recording media 103a and 214a, the programs may be installed in the authentication management apparatus 100 and the image processing apparatus 200 through a drive device 103 readable by the recording medium 103a and an external memory I/F 214 readable by the recording medium 214a. Because the authentication management apparatus 100 and the image processing apparatus 200 include the interface device 107 and the network I/F 213, it is possible to download these programs via a telecommunications circuit such as the Internet.

In the Embodiments, any one of the authentication management apparatus 100 and the image processing apparatus 200 has the utilization constraint function. However, the present invention is not limited thereto. For example, both the authentication management apparatus 100 and the image processing apparatus 200 may have utilization constraint functions, and, depending on traffic of a data transmission path N connecting the authentication management apparatus 100 to the image processing apparatus 200, any one of the utilization constraint functions may be selected. When the authentication management apparatus 100 has the utilization function, since the operation logs for each page of transmitted from the image processing apparatus 200, data traffic increases more than that in an original structure of the image processing apparatus 200. Therefore, it is possible to control the utilization constraint functions of the authentication management apparatus 100 and the image processing apparatus 200 by monitoring communications caused by the traffic. When the communication load is relatively low, the utilization constraint function of the authentication management apparatus 100 may be operated. When the communication load is relatively high, the utilization constraint function of the image processing apparatus 200 may be operated.

There has been described the structure where the authentication management apparatus 100 has the utilization constraint function. However, the present invention is not limited thereto. For example, a utilization constraint function may be installed in an information processing apparatus other than the authentication management apparatus 100 and the image processing apparatus 200. For example, an authentication management server for carrying out user authentication may be previously provided by an active directory in a user environment. Under the user environment, the authentication management server already existing in the user environment may be used to authenticate the image processing apparatus 200, and the utilization constraint based on the authenticated result may be carried out in an information processing unit other than the authentication management server 100 and the image processing apparatus 200.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that various changes, substitutions, and alterations could be made thereto without departing from the spirit and scope of the invention.

This patent application is based on Japanese Priority Patent Application No. 2009-212444 filed on September 14, 2009 and Japanese Priority Patent Application No. 2010-037641 filed on February 23, 2010, the entire contents of which are hereby incorporated herein by reference.

### (Appendix)

The present invention may be specifically embodied by at least any one of the following structures.
(1) An information processing apparatus having a function related to printing to which an authentication management apparatus for carrying out a user authentication is connected via a predetermined data transmission path, the information processing apparatus including:
   a log reporting unit for issuing and reporting operation logs of a utilization function for each page to an outside of the information processing apparatus when the information processing apparatus receives a request for utilizing the utilization function from a user authenticated by the authentication management apparatus, and
   an operation changing unit for instructing an operation change to the utilization function for each page based on the operation logs reported by the log reporting unit.
(2) The information processing apparatus according to (1), further including
   an updating unit for updating a value of an accumulated consumption amount quantitatively indicating an accumulated consumption caused by past request operations based on the operation logs, and
   a determining unit for determining whether a utilization constraint of the utilization function is to be carried out based on the accumulated consumption amount updated by the updating unit and a set upper limit value related to consumption,
   wherein the operation changing unit instructs the utilization function to carry out an operation change for each page when the determining unit determines that the utilization constraint is carried out.
(3) The information processing apparatus according to (2), further including
   a calculating unit for calculating a consumption amount caused by carrying out the utilization function upon the request of the user based on the operation logs,
   wherein the updating unit adds the consumption amount calculated by the calculating unit to the accumulated consumption amount to update the accumulated consumption amount with a newest value.
(4) The information processing apparatus according to (3),
   wherein the calculating unit calculates the consumption amount based on a number of pages included in the operation logs and a coefficient for calculating a consumption amount per page when the utilization function is carried out.
(5) The information processing apparatus according to (2), (3) or (4),
   wherein the determining unit compares the accumulated consumption amount updated by the updating unit and the set upper limit value related to the consumption, and determines that the utilization constraint of the utilization function is carried out when the updated accumulated consumption amount exceeds the set upper limit value.
(6) The information processing apparatus according to (2), (3), (4) or (5),
   wherein the upper limit value is set for each user and/or each function.
(7) An information processing apparatus having a function related to printing and being connected to one or plural apparatuses via a predetermined data transmission path, including
   a log receiving unit for receiving operation logs of a utilization function issued and transmitted from the one or plural apparatuses in which the utilization function is carried out in response to a request for utilizing the utilization function from an authenticated user, and
   an operation change requesting unit for requesting an operation change for each page to the apparatus in which the utilization function operates based on the operation logs received by the log receiving unit.
(8) The information processing apparatus according to (7), further including
   an updating unit for updating a value of an accumulated consumption amount quantitatively indicating an accumulated consumption caused by past request operations based on the operation logs, and
   a determining unit for determining whether a utilization constraint of the utilization function is to be carried out based on the accumulated consumption amount updated by the updating unit and a set upper limit value related to consumption,
   wherein the operation change requesting unit instructs the one or plural apparatuses to carry out an operation change for each page when the determining unit determines that the utilization constraint is to be carried out.
(9) The information processing apparatus according to (8), further including
   a calculating unit for calculating a consumption amount caused by carrying out the utilization function upon the request of the authenticated user based on the operation logs,
   wherein the updating unit adds the consumption amount calculated by the calculating unit to the accumulated consumption amount to update the accumulated consumption amount with a newest value.
(10) The information processing apparatus according to (9),
   wherein the calculating unit calculates the consumption amount based on a number of pages included in the operation logs and a coefficient for calculating a consumption amount per page when the utilization function is carried out.
(11) The information processing apparatus according to (8), (9) or (10),
   wherein the determining unit compares the accumulated consumption amount updated by the updating unit and the set upper limit value related to the consumption, and determines that the utilization constraint of the utilization function is carried out when the updated accumulated consumption amount exceeds the set upper limit value.
(12) The information processing apparatus according to (8), (9), (10) or (11),
   wherein the upper limit value is set for each user and/or each function.
(13) An information processing system including one or plural apparatuses having a function related to printing, an authentication management apparatus for carrying out a user authentication, and a predetermined data transmission path connecting the one or plural apparatuses to an authentication management apparatus,
   wherein the authentication management apparatus includes
   an authenticating unit for carrying out a user authentication based on authentication information transmitted from the one or plural apparatuses in response to an authentication request transmitted from the one or plural apparatuses and reporting a result of the user authentication to the one or plural apparatuses transmitting the authentication request, and
   the one or plural apparatuses include
   a log reporting unit for issuing and reporting operation logs of a utilization function for each page when the one or plural information processing apparatuses receive a request for utilizing the utilization function from a user authenticated by the authenticating unit, and
   an operation changing unit for instructing an operation change to the utilization function for each page based on the operation logs reported by the log reporting unit.
(14) An information processing system including one or plural apparatuses having a function related to printing, an authentication management apparatus for carrying out a user authentication, and a predetermined data transmission path connecting the one or plural apparatuses to an authentication management apparatus,
   wherein the authentication management apparatus includes
   an authenticating unit for carrying out a user authentication based on authentication information transmitted from the one or plural apparatuses in response to an authentication request transmitted from the one or plural apparatuses and reporting a result of the user authentication to the one or plural apparatuses transmitting the authentication request, and
   a log receiving unit for receiving operation logs of a utilization function issued and transmitted from the one or plural apparatuses, and
   an operation change requesting unit for requesting an operation change for each page to the one or plural apparatuses in which the utilization function operates based on the operation logs received by the log receiving unit, and
   the one or plural apparatuses includes
   a log reporting unit for issuing and reporting operation logs of the utilization function for each page when the one or plural information processing apparatuses receive a request for utilizing the utilization function from a user authenticated by the authenticating unit.
(15) An information processing system including one or plural apparatuses having a function related to printing, an authentication management apparatus for carrying out a user authentication, an information processing unit for carrying out a utilization constraint of a utilization function of the one or plural apparatuses, and a predetermined data transmission path connecting the one or plural apparatuses to an authentication management apparatus,
   wherein the authentication management apparatus includes
   an authenticating unit for carrying out a user authentication based on authentication information transmitted from the one or plural apparatuses in response to an authentication request transmitted from the one or plural apparatuses and reporting a result of the user authentication to the one or plural apparatuses transmitting the authentication request, and
   the one or plural apparatuses include
   a log reporting unit for issuing and reporting operation logs of the utilization function for each page when the one or plural information processing apparatuses receive a request for utilizing the utilization function from a user authenticated by the authenticating unit, and
   the information processing unit includes
   a log receiving unit for receiving operation logs of the utilization function issued and transmitted from the one or plural apparatuses, and
   an operation change requesting unit for requesting an operation change for each page to the one or plural apparatuses in which the utilization function operates based on the operation logs received by the log receiving unit.
(16) A utilization constraint method in an information processing apparatus having a function related to printing to which an authentication management apparatus for authenticating a user is connected via a predetermined data transmission path, the utilization constraint method including:
   a log reporting step of issuing and reporting operation logs for each page when a request for utilizing the function is received from the user authenticated by the authentication management apparatus, and
   an operation changing step of instructing to change an operation of the utilization function utilized by the authenticated user for each page based on operation logs reported by the log reporting step.
(17) A utilization constraint method in an information processing apparatus having a function related to printing to which one or more apparatuses are connected via a predetermined data transmission path, the utilization constraint method including:
   a log receiving step of receiving operation logs of a utilization function which are issued and transmitted for each page from the one or plural apparatuses in which an installed function is carried out as the utilization function upon a request of utilizing the utilization function from an authenticated user, and
   an operation changing step of requesting to change an operation of the utilization function to the one or plural apparatus in which the utilization function is carried out for each page based on the operation logs received in the log receiving step.
(18) A utilization constraint program used in an information processing apparatus having a function related to printing to which an authentication management apparatus for authenticating a user is connected via a predetermined data transmission path, wherein the utilization constraint program causes a computer of an information processing apparatus to perform:
   a log reporting step of issuing and reporting operation logs for each page when a request for utilizing the function is received from the user authenticated by the authentication management apparatus, and
   an operation changing step of instructing to change an operation of the utilization function utilized by the authenticated user for each page based on operation logs reported by the log reporting step.
(19) A utilization constraint program used in an information processing apparatus having a function related to printing to which one or more apparatuses are connected via a predetermined data transmission path, wherein the utilization constraint program causes a computer of the information processing apparatus to perform:
   a log receiving step of receiving operation logs of a utilization function which are issued and transmitted for each page from the one or plural apparatuses in which an installed function is carried out as the utilization function upon a request of utilizing the utilization function from an authenticated user, and
   an operation changing step of requesting to change an operation of the utilization function to the one or plural apparatuses in which the utilization function is carried out for each page based on the operation logs received in the log receiving step.
(20) A recording medium storing the utilization constraint program according to (18) or (19).
(21) An information processing apparatus including:
   an accumulated value updating unit for receiving utilization information indicative of a utilization mode of a function provided by an image processing apparatus which carries out a process requested by a user via a network and recording an accumulated value of a utilization amount of the function in an accumulated value storing unit based on the utilization information, and
   a constraint unit for changing an execution mode of the process carried out by the image processing apparatus based on a comparison between the accumulated value recorded in the accumulated value storing unit and an upper limit value stored in an upper limit value storing unit.
(22) The information processing apparatus according to (21),
   wherein the accumulated value updating unit records the accumulated value in the accumulated value storing unit for each user based on identification information of the user included in the utilization information, and
   the constraint unit changes the execution mode of the process based on the comparison between the accumulated value and the upper limit value.
(23) The information processing apparatus according to (21) or (22),
   wherein the upper limit value storing unit stores the upper limit value for each user, and the constraint unit changes the execution mode of the process carried out by the image processing apparatus based on a comparison between the accumulated value related to the process and the upper limit value for the user.
(24) The information processing apparatus according to (21), (22), or (23), further including
   a utilization amount information storing unit for storing a utilization amount in response to the utilization mode for each function,
   wherein the accumulated value updating unit determines the utilization amount in response to the identification information of the function included in the utilization information and the utilization mode indicated by the utilization information with the utilization amount information storing unit, and adds the utilization amount to the accumulated value recorded in the accumulated value storing unit.
(25) The information processing apparatus according to (24),
   wherein the utilization amount information storing unit stores a coefficient for calculating the utilization amount in response to a value of an attribute item of the function, and
   the accumulated value updating unit calculates the utilization amount based on the coefficient in response to the utilization mode indicated by the identification information and the utilization information included in the utilization information, and adds the utilization amount to the accumulated value recorded in the accumulated value storing unit.
(26) The information processing apparatus according to (21) to (25)
   wherein the execution mode is changed by at least any one of a display of predetermined information of a display unit, a stop of the process, and a change of the value of the attribute item related to the process.
(27) A utilization constraint method carried out by a computer including:
   an accumulated value updating step of receiving utilization information indicative of a utilization mode of a function provided by an image processing apparatus which carries out a process requested by a user via a network and recording an accumulated value of a utilization amount of the function into an accumulated value storing unit based on the utilization information, and
   a constraint step of changing an execution mode of the process carried out by the image processing apparatus based on a comparison between the accumulated value recorded in the accumulated value storing unit and an upper limit value stored in an upper limit value storing unit.
(28) The utilization constraint method according to (27),
   wherein in the accumulated value updating step, the accumulated value is stored for each user in the accumulated value storing unit based on identification information of the user included in the utilization information, and
   in the constraint step, the execution mode of the process carried out by the image processing apparatus is changed based on a comparison between the accumulated value for the user related to the process and the upper limit value.
(29) The utilization constraint method according to (27) or (28),
   wherein the upper limit value storing unit stores the upper limit value for each user, and
   in the constraint step, the execution mode of the process is changed by the image processing apparatus based on a comparison between the accumulated value for the user related to the process and the upper limit value.
(30) The utilization constraint method according to (27), (28), or (29),
   wherein in the accumulated value updating step, the utilization amount corresponding to the identification information of the function included in the utilization information and the utilization mode indicated by the utilization information is determined based on the utilization amount information storing unit storing the utilization amount corresponding to the utilization mode for each function, and the utilization amount is added to the accumulated value stored in the accumulated value storing unit.
(31) The utilization constraint method according to (30),
   wherein the utilization amount information storing unit stores the coefficient for calculating the utilization amount corresponding to the value of the attribute item of the function for each function, and
   in the accumulated value updating step, the utilization amount is calculated based on the coefficient in response to the identification information of the function included in the utilization information and the utilization mode indicated by the utilization information, and the utilization amount is added to the accumulated value recorded in the accumulated value storing unit.
(32) The utilization constraint method according to (27), (28), or (29),
   wherein the execution mode is changed by at least any one of a display of predetermined information of a display unit, a stop of the process, and a change of the value of the attribute item related to the process.
(33) A program causing a computer for an image processing apparatus when executed by the computer to perform:
   a utilization constraint method carried out by the computer including:
      an accumulated value updating step of receiving utilization information indicative of a utilization mode of a function provided by the image processing apparatus which carries out a process requested by a user via a network and recording an accumulated value of a utilization amount of the function into an accumulated value storing unit based on the utilization information, and
      a constraint step of changing an execution mode of the process carried out by the image processing apparatus based on a comparison between the accumulated value recorded in the accumulated value storing unit and an upper limit value stored in an upper limit value storing unit.
(34) The program according to (33),
   wherein in the accumulated value updating step, the accumulated value is stored for each user in the accumulated value storing unit based on identification information of the user included in the utilization information, and
   in the constraint step, the execution mode of the process carried out by the image processing apparatus is changed based on a comparison between the accumulated value for the user related to the process and the upper limit value.
(35) The program according to (33) or (34),
   wherein the upper limit value storing unit stores the upper limit value for each user, and
   in the constraint step, the execution mode of the process is changed by the image processing apparatus based on a comparison between the accumulated value for the user related to the process and the upper limit value.
(36) The program according to (33), (34), or (35),
   wherein in the accumulated value updating step, the utilization amount corresponding to the identification information of the function included in the utilization information and the utilization mode indicated by the utilization information is determined based on the utilization amount information storing unit storing the utilization amount corresponding to the utilization mode for each function, and the utilization amount is added to the accumulated value stored in the accumulated value storing unit.
(37) The program according to (36),
   wherein the utilization amount information storing unit stores the coefficient for calculating the utilization amount corresponding to the value of the attribute item of the function for each function, and
   in the accumulated value updating step, the utilization amount is calculated based on the coefficient in response to the identification information of the function included in the utilization information and the utilization mode indicated by the utilization information, and the utilization amount is added to the accumulated value recorded in the accumulated value storing unit.
(38) The program according to (33) to (37),
   wherein the execution mode is changed by at least any one of a display of predetermined information of a display unit, a stop of the process, and a change of the value of the attribute item related to the process.

## Claims

1. An information processing system comprising:
an information processing apparatus configured to carry out a function related to printing;
an authentication management apparatus configured to carry out a user authentication for enabling a user requesting to carry out the function of the information processing apparatus; and
a predetermined data transmission path configured to connect the information processing apparatus to the authentication management apparatus,
wherein the information processing apparatus carries out a process of the function in response to the request from the user and is enabled to report operation logs to an outside of the information processing apparatus, and
any one of the information processing apparatus and the authentication management apparatus determines whether an execution mode of the process required by the user is to be changed based on the operation logs.

2. The information processing system according to claim 1,
wherein, in determining whether the execution mode of the process required by the user is to be changed based on the operation logs, an accumulated utilization amount is acquired from a utilization amount calculated based on the operation logs, and the accumulated utilization amount is updated by the acquired utilization amount, and
it is determined whether the execution mode of the process is to be changed based on by evaluating the accumulated utilization amount.

3. The information processing system according to claim 1,
wherein the information processing apparatus is enabled to process a manuscript including plural pages, and it is determined whether to change the execution mode of the process for each page.

4. The information processing system according to claim 1,
wherein the information processing apparatus includes a control unit enabled to change the execution mode of the process based on a result of the determination.

5. The information processing system according to claim 1,
wherein the authentication management apparatus includes a control unit enabled to change the execution mode of the process based on a result of the determination.

6. The information processing system according to claim 2,
wherein the process carried out by the information processing apparatus is classified by utilization functions,
coefficients for acquiring the utilization amounts are set up for each of the utilization functions, and
the utilization amounts are acquired using the coefficients.

7. The information processing system according to claim 2,
wherein the process carried out by the information processing apparatus is classified by utilization functions,
the evaluation of the accumulated utilization amount is to determine that the execution mode of the process is changed when the accumulated utilization amount exceeds an upper limit value which is set up for each of combinations of the user and the utilization functions.

8. The information processing system according to claim 1, further comprising:
an external apparatus configured to provide an external function via the predetermined data transmission path,
wherein the external apparatus is enabled to carry out a process of the external function in response to a request from the user and report utilization information indicative of a utilization mode of the external function when the process of the external function is carried out,
wherein the information processing system calculates an external function utilization amount based on the reported utilization information, obtains an accumulated external function utilization amount of the external apparatus based on the external function utilization amount, updates the accumulated external function utilization amount using the external function utilization amount, and determines whether an execution mode of the process of the external function is to be changed by evaluating the accumulated external function utilization amount of the external apparatus.

9. A utilization constraint method in a information processing system including
an information processing apparatus carrying out a function related to printing, an authentication management apparatus carrying out a user authentication for enabling a user to request to carry out the function of the information processing apparatus, and a predetermined data transmission path connecting the information processing apparatus to the authentication management apparatus, the utilization constraint method comprising:
carrying out with the information processing apparatus a process of the function in response to the request from the user;
reporting with the information processing apparatus operation logs to an outside of the information processing apparatus, and
determining with any one of the information processing apparatus and the authentication management apparatus whether an execution mode of the process required by the user is to be changed based on the operation logs.

10. The utilization constraint method according to claim 9,
wherein an accumulated utilization amount is acquired from a utilization amount calculated based on the operation logs, the accumulated utilization amount is updated by the acquired utilization amount, and it is determined whether to change the execution mode of the process by evaluating the accumulated utilization amount.

11. The utilization constraint method according to claim 9,
wherein the changing of the execution mode of the process is carried out by a control unit included in the information processing apparatus.

12. The utilization constraint method according to claim 9,
wherein the changing of the execution mode of the process is carried out by a control unit included in the information processing apparatus.

13. The utilization constraint method according to claim 10,
wherein the process carried out by the information processing apparatus is classified by utilization functions,
coefficients for acquiring the utilization amounts are set up for each of the utilization functions, and
the utilization amounts are acquired using the coefficients.

14. The utilization constraint method according to claim 9,
wherein the information processing system further includes an external apparatus configured to provide an external function via the predetermined data transmission path,
wherein the external apparatus is enabled to carry out a process of the external function in response to a request from the user and report utilization information indicative of a utilization mode of the external function when the process of the external function is carried out,
wherein the utilization constraint method further comprises
calculating an external function utilization amount based on the reported utilization information;
obtaining an accumulated external function utilization amount of the external apparatus based on the external function utilization amount,
updating the accumulated external function utilization amount using the external function utilization amount, and
determining whether an execution mode of the process of the external function is to be changed by evaluating the accumulated external function utilization amount of the external apparatus.

15. A non-transitory recording medium storing a program used for an information processing system including
an information processing apparatus configured to carry out a function related to printing and a process of the function in response to a request from a user and is enabled to report operation logs to an outside of the information processing apparatus,
an authentication management apparatus configured to carry out a user authentication for enabling the user to request to carry out the function of the information processing apparatus, and
a predetermined data transmission path configured to connect the information processing apparatus to the authentication management apparatus,
the program causing a computer for the information processing system, which, when executed by the computer, to determine whether an execution mode of the process required by the user is to be changed based on the operation logs.
